# EUROPEAN PATENT APPLICATION

(11) **EP 4 227 749 A1**
(43) Date of publication of application: **16.08.2023**
(21) Application number: 22156584.9
(22) Date of filing: 14.02.2022
(51) Int. Cl.: G05B 23/02

(54) **AN AUGMENTED REALITY-BASED AUTOMATION SYSTEM**

(71) Applicant: BASF SE, 67056 Ludwigshafen am Rhein (DE)
(72) Inventor: HARTMANN, Michael, 49448 Lemfoerde (DE); DR. WINKLER, Christian-Andreas, 78642 Bürstadt (DE); RUDOLPH, Hans, 49448 Lemfoerde (DE); HOPPE, Henry, 67061 Ludwigshafen (DE)
(74) Representative: BASF IP Association

(57) **Abstract**

An automation system for controlling an automated production process of an industrial plant including a plurality of equipment for performing the production process is provided. The system includes an augmented reality system, including a database system configured to store data and spatial coordinates associated with respective equipment of the plurality of equipment, augmented reality glasses configured to display the data, and executable program logic coupled to the augmented reality glasses. The executable program logic is configured to receive an up-to-date spatial position of a user from a positioning system and the data of equipment that are located in a proximity of the up-to-date spatial position of the user from the database system and control the augmented reality glasses for display of at least some of the received data.

## Description

### FIELD OF THE INVENTION

Certain embodiments of the invention relate to the field of automation systems. More specifically, certain embodiments of the invention relate to augmented reality-based automation systems as applied to industrial plants.

### BACKGROUND OF THE INVENTION

In industrial plants, input material is processed to manufacture one or more products. Properties of the manufactured product thus have a dependence upon manufacturing parameters and the input material.

Within process industry, in particular in industrial plants such as chemical or biological production plants, one or more input materials are processed using a production process for producing one or more chemical or biological products. Production environment in the process industry can be complex, accordingly the properties of the product may vary according to variations in the production parameters that influence said properties. Usually, the dependency of the properties on production parameters can be complex and intertwined with a further dependence on one or more combinations of specific parameters. It may thus be challenging to produce a chemical or biological product with consistent and/or predictable quality.

In particular, product quality and/or production stability is dependent upon operators having up-to-date information on the status of the plant, which includes quick and easily-accessible access to operational characteristics of the plant equipment and supporting infrastructure, as well as values for the current process parameters corresponding to respective equipment, ambient environmental plant parameters and/or parameters associated with raw materials and intermediate products produced during the processing of materials. Information on the status of the plant may also include maintenance history of the equipment and information on how each equipment operates, including ranges for the operational parameters for safely operating the equipment.

The operation and maintenance of production facilities usually requires specialized knowledge of machines and manufacturing processes. However, there is often a shortage of employees with appropriate knowledge. At the very least, it can take some time for appropriately trained maintenance personnel to be on site, for example, when a machine has a technical problem.

There is hence a need for approaches that can improve the process of controlling and/or maintaining an automated plant production process to provide products of consistent and/or predictable quality.

### BRIEF SUMMARY OF THE INVENTION

At least some of the problems inherent to the prior art will be shown solved by the subject matter of the accompanying independent claims. At least some of the further advantageous alternatives will be outlined in the dependent claims.

Various embodiments provide a system for controlling an automated production process of an industrial plant as described by the subject matter of the independent claims. Advantageous embodiments are described in the dependent claims. Embodiments of the present invention can be freely combined with each other if they are not mutually exclusive.

In one aspect, the invention relates to an automation system for controlling an automated production process of an industrial plant, the industrial plant including a plurality of equipment for performing the production process, the plurality of equipment being spatially distributed in the industrial plant. The automation system includes an augmented reality system, and the augmented reality system includes a database system configured to store data and spatial coordinates associated with respective equipment of the plurality of equipment, augmented reality glasses configured to display the data, and executable program logic coupled to the augmented reality glasses. The executable program logic is configured to receive an up-to-date spatial position of a user wearing the augmented reality glasses from a positioning system and the data of equipment that is located in a proximity of the up-to-date spatial position of the user from the database system. The executable program logic is further configured to control the augmented reality glasses for display of at least some of the received data.

These features have the advantages of quickly, efficiently and securely receiving data by a user of the AR glasses corresponding to equipment in the vicinity of the user of the AR glasses, where the data overlays (i.e., augments) the view of the plant through the AR glasses, thereby enabling the user to efficiently control the automated process in a hands-free manner (i.e., the user need not to carry instruction manuals and maintenance records when inspecting and controlling production lines and production processes). Furthermore, the amount of data does not overwhelm the user, since according to embodiments, the executable program logic is configured to limit the data is displayed to the user via the augmented reality glasses (AR glasses) to data assigned to equipment that is in the vicinity of the location of the user. The executable program logic is further configured to control the augmented reality glasses for display of at least some, if not all, of the received data.

In one embodiment, the augmented reality system (AR system) further includes the positioning system. The positioning system is configured for sensing a spatial position of the user in the plant. These features have the advantage of tailoring the positioning system to the requirements of the industrial plant. For example, if the plant is not of an open floor plan, but is compartmentalized, a commercially available GPS system may not be effective in such a closed, in-door environment. A positioning system, as a component of the augmented reality system, may mitigate such problems.

For example, and according to further embodiments, the positioning system may include a spatial mapping mesh covering at least a portion of the plant, an indoor positioning system, a cellular positioning system, or even a combination of one of the preceding systems with a GPS system.

According to embodiments, the spatial mapping mesh comprises spatial anchors. The spatial anchors are interconnected. Each spatial anchor relates a coordinate system associated with the augmented reality glasses for the display of the data to a spatial coordinate system associated with the spatial coordinates of one or more of the plurality of equipment stored in the database system. The program logic is configured to display the data of equipment that is located in a proximity of the up-to-date spatial position of the user via the augmented reality glasses at predefined relative positions to the spatial anchors.

According to embodiments, the augmented reality system is configured to create an avatar for at least one remote user. The remote user is a user who is remote to the industrial plant. The program logic is configured to display the avatar in a proximity of the up-to-date spatial position of the user wearing the augmented reality glasses via the augmented reality glasses. According to preferred embodiments, the augmented reality system is configured to provide a bidirectional visual and/or acoustic communication channel between the user wearing the augmented reality glasses and the remote user. Thereby, the AR-glasses give the wearer the impression that he or she is talking directly to the avatar, not to the remote user. For example, the program logic displays the avatar via the AR glasses and/or controls the output of the voice of the remote user via speakers of the AR glasses such that the position of the avatar is perceived as the source of the voice of the remote user.

According to some embodiments, the automation system comprises a robot with a camera and/or a microphone. The robot is located in the industrial plant, so it is "local" for the user wearing the AR glasses and working in the industrial plant. The augmented reality system comprises a robot-control module configured to control the movement and/or orientation of the robot such that the position and/or orientation of the robot reflects the position and/or orientation of the avatar within the augmented reality displayed via the AR glasses. The robot-control module is configured to automatically update the position and/or orientation of the avatar and the robot in accordance with a change in the position and/or orientation of the remote user or in response to a control command submitted by the remote user.

This may allow for a seamless integration and merging of the "realities" of a remote user, a local user and of various physical objects (raw materials, equipment) into a single, augmented reality displayed via the AR glasses.

According to embodiments, the augmented reality glasses comprise an acoustic output interface, wherein the augmented reality system is configured to provide a bidirectional acoustic communication channel between the user wearing the augmented reality glasses and the avatar. The program logic is configured to control the acoustic output interface such that the volume of the voice of the avatar output via the acoustic output interface to the user wearing the augmented reality glasses negatively correlates with the distance of the user wearing the glasses and the avatar within the coordinate system associated with the augmented reality glasses for the display of the data.

The acoustic output interface can be, for example, speakers in the environment of the user wearing the AR glasses, headphones that can be integrated into the AR glasses, or in-ear speakers.

In an embodiment, the database system is graph database system, and/or a spatial database system and/or a streaming database system.

In another embodiment, the automation system further includes a control system. The control system can be a distributed control system. The control system includes a memory having stored one or more process parameters and a control software. At least some of the parameters are stored in association with the one or more of the equipment, e.g. by storing the parameters in association with equipment-IDs. The control system comprises a processor configured to execute the process control software for automatically controlling the production process. For example, the control software can control the use of the equipment such that the production process is performed in accordance with the one or more parameters assigned to the said equipment. For example, this can imply that one or more of the parameters represent desired machine states and/or product features and the control is executed such that the machines operate in the desired state and/or such that the products have the desired features. For example, if a product shall have a desired shape, size and/or temperature, the production process can be controlled such that any difference between a measured, observed product feature and the desired product feature is minimized.

According to embodiments, the AR system is configured to generate and display a GUI via the AR glasses, wherein the GUI enables the user who is wearing the AR glasses to set one or more of the parameters, e.g., via gesture detection and gesture interpretation.

For example, the AR glasses can be equipped with a gyroscope which is configured to detect the orientation of the AR-glasses and the user carrying the AR-glasses. In addition, the AR glasses can be equipped with one or more cameras configured to acquire one or more images of the vicinity in front of the user. The executable program logic can be configured to analyze the digital images acquired by the camera(s) of the AR glasses for identifying gestures of the user. The program logic is configured to identify a user action and an entry, modification, or deletion of a parameter via the GUI as a function of the type of gesture, the position and/or direction of the gesture.

These features have the advantage enabling the user of the AR glasses to modify the control software of the distributed control system, based on the data conveyed to the user through the AR glasses, to change the operation of the equipment for providing a more consistent and predictable product. For example, a user may determine that a particular sensor of an equipment or equipment part is too sensitive and may therefore erroneously detect production errors (false positive problems). In this case, the user may set a sensitivity-control parameter of this sensor to a lower value, thereby reducing the number of false-positive alarms which may slow down the production process. According to another example, the user may determine that an actuator of the equipment is too weak, thereby causing an unacceptably large number of erroneous products. In this case, the user may use the GUI presented via the AR glasses to increase the parameter controlling the power/action amplitude of the actuator of the equipment.

According to embodiments, the AR system is configured to generate a GUI which selectively allows the user to set, modify or delete parameters assigned to equipment which are within a predefined maximum distance from the user. For example, the maximum distance may be 5 m, or 2 m, or even 1 m. This may have the advantage that only those parameters are presented to the user which are of relevance when dealing with a particular equipment or equipment part.

According to embodiments, the control system is a distributed control system comprising a plurality of control software programs or modules interconnected with each other via a network.

According to a further embodiment, the at least one equipment comprises one or more sensors coupled to the at least one equipment, and one or more actuators coupled to the at least one equipment. The one or more sensors are configured to measure the one or more process parameters of the at least one equipment, where the one or more process parameters indicate the current state of the production process of the plant and/or indicate the current state or mode of operation of the equipment. The one or more actuators are configured to control the one or more process parameters. In addition, the distributed control system is coupled to the one or more sensors and the one or more actuators, and the processor is configured to execute the process control software for automatically controlling the production process based on measurement signals received from the one or more sensors and control signals sent to the one or more actuators. In addition, or alternatively, the one or more actuators are configured to be operated in accordance with the one or more control parameters (e.g., pressure, temperature light intensity, concentration of one or more chemicals, machine operation mode, etc.).

According to a further embodiment, the automation system of claim includes a user database coupled to the distributed control system. The user database is configured to store user information associated with the production process. In some embodiments, the user information includes user IDs, user roles and/or user privileges.

In yet another embodiment, the executable program logic is configured to receive user credentials from the user and authenticate the user. For example, the authentication can be performed as a function of matching the user credentials with a user ID of the user IDs. The user ID of the user wearing the augmented reality glasses is associated with one or more of the user roles and each user role of the one or more user roles includes one or more of the user privileges. The executable program logic is further configured to select and display content of the at least some of the received data for display based upon the one or more user roles and/or the one or more user privileges associated with the user ID.

These features have the advantage of providing data only to authorized users (i.e., providing data through a secure system), and if the user is authorized, then the selection of the data to be viewed by a user, which may include the type of data and and/or the content of the data, is further based on the one or more user roles and/or the one or more user privileges associated with the user's user ID.

According to embodiment, the executable program logic is configured to generate a GUI to be displayed via the AR glasses to the user, whereby the content of the GUI to be displayed is determined dynamically as a function of the role assigned to the user wearing the AR glasses. The executable program logic is configured to generate a first type of GUI for the user if the user is within a predefined maximum distance from a particular equipment and has a first role, and is configured to generate a second type of GUI for the user if the user is within the predefined maximum distance from said particular equipment and has a second role. The first and the second GUIs are different, e.g., comprise different GUI elements, display different information, enabling different types of actions for maintaining and/or controlling the said equipment. For example, the first user role can be "operator", i.e., a user who is obliged to control and/or monitor one or more steps in a production workflow. The second user role can be "maintenance worker", i.e., a user who is obliged to do maintenance word to ensure that the at least one equipment works properly. For example, a maintenance worker may be necessary to repair a failed machine, to replace worn-out parts of the equipment, perform some quality testing of the equipment etc. In general, a maintenance worker is responsible for technically complex tasks which may require in-depth technical knowledge of the equipment which is typically not available to a user having "operator" role. So, if an "operator" user approaches a particular equipment/machine, he or she will see a GUI which is different from the GUI a "maintenance worker" will see via his or her AR-glasses when approaching the said equipment/machine.

This may make various tasks to be executed with the help of or on an equipment more efficient and error-robust, because each user will only see information via the AR glasses he or she really needs for fulfilling his or her actual task. The risk of error scenarios in which a "normal operator" causes an error in a production process by accidentally modifying a machine parameter which should only be changed by a skilled maintenance worker may greatly be reduced, because the "operator" user will not "see" a GUI enabling him or her to change said machine parameters.

According to embodiments, the executable program logic is configured to perform a query of the database based upon the up-to-date spatial position for retrieving, from the database, the data of equipment that are in the proximity of the up-to-date spatial position of the user.

According to embodiments, the database system is a spatial database system, where the spatial database system includes a spatial database. The executable program logic is configured to perform a query of the spatial database based upon the up-to-date spatial position for retrieving, from the spatial database, the data of equipment that are in the proximity of the up-to-date spatial position of the user.

These features have the advantage of storing, searching, and retrieving data from the database system based upon querying the spatial database, including an up-to-date spatial position of the user of the AR glasses. That is, data associated with a plant object that is in proximity to the spatial position of the user is linked to the spatial position of the plant object, which is also stored in the database system, thereby enabling a fast and efficient manner of accessing the respective data when the database is queried. These features also have the advantage of only retrieving data at the request of a query, thereby saving network bandwidth.

In another embodiment, the database system is accessible via a subscription-based streaming service. This database system can be referred to as streaming database system. It may be implemented as a spatial and/or graph-based database system.

The executable program logic is configured to receive from the database via the streaming service the data of equipment that are in the proximity of the up-to-date spatial position of the user. According to embodiments, the executable program logic is configured to selectively receive from the spatial database via the streaming service the data of equipment that are in the proximity of the up-to-date spatial position of the user (but not data of equipment not in the proximity of the user). For example, a predefined or user-defined maximum distance threshold may be used by the database system for determining whether or not the position of an equipment is proximate to the user or not. These features have the advantage of quickly accessing data on a continuous basis through a streaming service, thereby eliminating sending and/or receiving queries.

For example, a user can subscribe to a streaming service which notifies the user in case the at least one equipment approaches the user and is now located within a predefined maximum distance from the user. When the user subscribes to this service, the current position of the user is automatically determined and provided as one parameter of the subscription request. The database system is configured to automatically and repeatedly check if the distance between the user having subscribed to the said notification service and the at least one equipment is below the maximum distance threshold. In response to this determination, a GUI, one or more GUI elements and/or parameters assigned to the at least one equipment are displayed to the user via the AR glasses. For example, the subscription of the user to the service is performed by the program logic automatically, e.g., upon a successful authentication of the user at the AR system and/or upon the user approaching the production system closer than a user-defined or predefined maximum distance of e.g., less than 10 m, or less than 5 m, or less than 2 m, or less than 1 m.

According to embodiments, the database system is configured to provide, in response to a query (e.g. a conventional SQL query) of the executable program logic, selectively the data of equipment that are proximate to the up-to-date spatial position of the user wearing the augmented reality glasses. A movement of the user relative to the equipment triggers the executable program logic to submit a new query to the database system comprising a new up-to-date spatial position of the user.

According to other embodiments, the database system is configured to provide, via the subscription-based streaming service, selectively the data of equipment that are located proximate to the up-to-date spatial position of the user wearing the augmented reality glasses. A movement of the user relative to the equipment triggers the executable program logic to update the subscription with new up-to-date spatial position of the user.

According to embodiments, the program logic is configured to update the subscription of the user to the streaming service automatically in response to a change of the position of the user. For example, the AR glasses may comprise a GPS sensor or another means for determining the current position of the user. In response to determining that the user has changed his or her position, the subscription(s) of the user to the streaming service(s) of the database system are automatically updated, thereby ensuring that the user will always be able to see data and GUIs relevant for the one or more equipment next to the user. This may have the advantage that the AR system and its components do not have to repeatedly submit conventional SQL queries with current position information of the user. It is sufficient to update the subscription of the user to one or more streaming services associated with the database system to ensure the data displayed via the AR glasses takes into account the current position of the user, thereby significantly reducing network traffic and the overall computational load of the AR system, in particular the computational load of the database system.

According to yet another embodiment, the spatial database system is a graph database system, which includes a graph database having a plurality of interconnected nodes. Each node represents one or more objects of the industrial plant and includes spatial information associated with the one or more objects. For example, in case a node represents multiple objects, these objects are typically close to each other during the manufacturing process. Depending on the embodiment, the spatial information associated with the one or more objects may be the position information of a single one of the multiple objects, or may be the position information of each of the multiple physical objects. The object is a sensor, an actuator, a raw material, an equipment of the plurality of equipment, e.g., a tool, or a machine or a robot. The architecture of the graph database enables a faster search and access to data associated with a given object in the plant, using only the spatial coordinates of the user of the AR glasses in the plant. Furthermore, by representing objects of the industrial plant which are and remain proximate to each other during the manufacturing process by a single node in the graph, it is possible to monitor the position of all objects of a node at least approximately so that positional information of at least one of the objects represented by the node is available.

According to some embodiments, the executable program logic is configured for:
- receiving coordinates of visual objects graphically representing the data of the equipment to be displayed; for example, the program logic may receive coordinates, e.g. positional 3D coordinates and the size of a visual representation of a handbook or instruction manual for said equipment, or coordinates of a virtual "TV screen" within which a tutorial for operating the equipment shall be displayed via the AR glasses;
- determining said user's line of sight in the coordinate system of the real world; for example, the executable program logic may receive, from the positioning system, an indication of the current position and orientation of the user wearing the AR glasses;
- receiving, from the database system, coordinates of real-world objects which are proximate to the up-to-date spatial position of the user wearing the augmented reality glasses; the real-world object can be a portable and/or mobile equipment, raw material, or product. The real-world object can be an object whose current position is constantly monitored and traced by the augmented reality system, e.g. by means of a GPS sensor, an indoor-positioning system, one or more capacitive or inductive proximity sensors, etc; so the coordinates of the real-world object indicate the real position, orientation and size of the real-world object in the real world; for example, the program logic may receive coordinates of the virtual mesh which was generated as an overlay of the equipment of the real-world production line; the received coordinates may also be coordinates which are determined dynamically by means of the position-determination-sensor(s) for the equipment or other type of real-world object;
- determining if one or more of the virtual objects representing data of an equipment are positioned along the user's line of sight and are farther away from the user than at least one of the real-world object which is also positioned along the user's line of sight; and
- not displaying selectively the one or more virtual objects determined to be on the user's line of sight and be located farther away than at least one of the real-world objects.

This may have the advantage that in case it is determined that a virtual object, e.g. a handbook, would, if displayed, be hidden by a "real world object", this virtual object is not displayed.

This feature may prevent the user from being distracted, as it is assumed that a real-world object that is even closer to the user on the user's line of sight (viewing axis) than, for example, a hologram with an educational film, will require even greater attention. For example, a user may be performing repair work on a conveyor belt while the conveyor belt continues to run. As soon as a workpiece transported on the belt comes into the user's visual axis and moves in front of the hologram, the hologram is completely or partially hidden (because the AR system stops displaying the hologram or at least the part of the hologram hidden by the real-world object). This has the advantage that the user is always aware of the moving object, so that accidents can be avoided. In addition, reading errors are also avoided, because when the hologram is displayed overlaid on a dynamically changing real-world scenery using the AR glasses, the brightness and contrast of the background change, so the user could make mistakes when reading the data of the virtual objects. It also makes the visual impression even more "immersive" for the user, as real, physical objects, which can be static or moving, can overlay and hide virtual objects, making the dynamically "hidden" virtual objects seem even more real and blend more seamlessly with the physical world objects.

According to embodiments, one or more of the nodes comprises or is stored in association with a respective container.

A "robot" as used herein is a machine which is able to move and perform certain tasks automatically. According to some embodiments, the robot comprises a robot-control module configured to control the movement, position, orientation and/or the tasks executed by the robot. In addition, or alternatively, a robot can be operatively coupled to a robot-control module external to the robot. For example, the control system described herein for embodiments of the invention can comprise the robot-control module or parts thereof. The robot-control module is configured to receive status information from one or more sensors the robot and to send control commands to the robot or to one or more parts of the robot, whereby the control commands determine the movement, position, orientation and/or the tasks executed by the robot. The one or more sensors of a robot can comprise position determination sensors such as GPS sensors, gyroscopes and accelerometers for determining the position and orientation of the robot, cameras and microphone for capturing images or videos and/or acoustic signals.

The coordinate system "associated with the AR glasses" is a coordinate system of an augmented reality comprising real-world objects (such as machines and raw materials) and one or more virtual objects. In the coordinate system of the augmented reality, coordinates of the real-world objects and of the virtual objects are mapped to this augmented-reality coordinate system and are displayed to the user wearing the AR glasses via said glasses such that the virtual objects and the real-world objects form part of a shared space (referred to as augmented reality). So, the coordinate system "associated with the AR glasses" can be considered the coordinate system of an augmented reality.

A "container" as used herein is an isolated runtime environment, e.g. an isolated user space instance. For example, a container can be an operation-system-level virtualization unit, wherein the kernel of the operation system allows and supports the existence of multiple isolated virtual runtime environments in parallel. For example, one of the following currently available container platforms can be used for implementing the containers: LXC, Solaris containers, Docker containers, virtual private servers (OpenVZ), virtual environments (VEs), virtual kernels (DragonFly BSD), or jails (FreeBSD jail or chroot jail). Each container may generate a runtime environment which looks to a software program running in them like real computers.

According to some embodiments, each container is stored within or assigned to a respective node of a graph of a graph database of the database system described herein. Each container comprises software programs and/or functions configured for monitoring and/or controlling the position, orientation and/or actions of one or more physical objects (e.g., raw materials, equipment, etc.) represented by said node, but not of physical objects represented by other nodes of the graph. Thereby, each container may encapsulate the functions used for monitoring and/or controlling the one or more objects. This may allow preventing unforeseeable errors and conflicts which may be caused by unknown software interdependencies. For example, a software problem might arise when a device driver for a machine is replaced by a newer version while there exists another machine whose control relies on the outdated version of the driver.

Depending on the embodiment, the degree of isolation of the containers from each other may vary to allow at least a limited, explicitly defined and hence highly secure data exchange between the containers and the software comprised therein.

According to some embodiments, each container implements an application programming interface (API) which enables the container to exchange data with other containers exclusively via this API. This may prevent a situation where software dependencies between multiple devices are overseen, and may allow for a container-individual data exchange and control protocol defining which other containers can exchange what kind of data with this container via the API.

According to other embodiments, there may exist a central data exchange interface provided at the application level by a container management software. Thereby, data exchange between containers is enabled in a centralized and more unformal approach, which may nevertheless prevent errors caused by hidden software interdependencies.

A computer program running on an ordinary operating system can "see" (detect the existence of and/or access) all resources (connected devices, files and folders, network shares, CPU power, quantifiable hardware capabilities) of that computer. However, according to some embodiments of the invention, programs running inside of a container can only "see" the container's contents and devices assigned to the container. In this case, the software in a container can only see the object represented by the graph node assigned to the container. In some embodiments, the containers are programmed and/or configured such that they are able to exchange data with other containers only via one or more APIs (and hence, on the application layer) provided by the respective container and/or a central container management software.

For example, the one or more objects monitored and/or controlled by a container's software can be or comprise one or more sensors and/or actuators of an equipment (e.g., a tool, a machine, a robot), the equipment or raw material. Hence, the software within a container can only "see" and optionally modify parameters of equipment represented by the container's respective node. It cannot see or manipulate objects represented by other containers assigned to other nodes unless in cases where a defined API for data exchange with this other container exists.

According to some embodiments, each of the containers comprises software for monitoring and/or operating the one or more objects represented by said node and comprises a position reporting module. A position reporting module is a software program or function configured to monitor the position of at least one of the one or more objects represented by the respective node and to update the spatial information associated with the at least one object of the respective node in the database system. For example, a node may represent an object which may comprise a GPS sensor or other means for repeatedly and automatically determine its own position. The position information is automatically transferred from the position sensor to the position reporting module and is stored by the position reporting module in the database system. This may ensure that any change in the position of the equipment, e.g., the current position of a movable robot, is automatically propagated to the positional information stored in the database system. This allows automatically determining if the equipment which has been moved in the direction of the user with the augmented reality glasses is now so close to the user wearing the AR glasses that data related to this object shall be displayed via the AR glasses. For example, the position reporting module can be a software program having subscribed to an equipment-specific streaming service provided by the database system. Whenever the respective equipment has actively or passively changed position, sensors on the equipment and/or in the environment detect the positional change of the equipment and the new position of the equipment and update the position information of the equipment in the database system accordingly. Updating the position information in the database triggers the submission of a message from the database system to the position reporting module of the container assigned to the node representing the said equipment. The program logic of the augmented reality glasses is configured to use the updated positional information of the equipment to check if the distance between the user wearing the AR-glasses and the equipment is small enough to display the data assigned to the said equipment or not.

According to some embodiments, one or more of the nodes of the graphs can comprise or be stored in association with two or more containers. Each of the containers may comprise software for monitoring and/or operating one or more physical objects. This may be beneficial as the topology of the graph and of the containers and the selection of objects monitored and/or controlled by a respective container can be flexibly adapted to the specific needs of a given industrial manufacturing facility.

Using containers may have the advantage that a container's activities will not have any hidden or unforeseeable impact on activities of the other containers. It is possible to delete, add, or move a graph node representing a container freely within the graph without affecting the activities in other containers. Likewise, it is possible to change or replace software comprised in a container without affecting the software used for monitoring and/or controlling other objects in an unforeseen way. Moreover, it may be possible to move the object in the real world without risking that the object status or position may interfere with the software used for monitoring and/or controlling physical objects represented by other containers. The changed position of the object will be recognized by the position reporting module of the respective container, but this will also have no impact on the data and software stored in the other containers. This may reduce downtimes of the AR system, because individual nodes and respective hardware objects can easily be modified or replaced without the risk of impeding the normal operation of the other hardware objects and their software programs. Since containers are configured as standardized units of software or in other words, an application package that includes all its libraries and dependencies, the container can be executed (i.e., run) quickly and reliably regardless of architecture of the database system.

In a further embodiment, each of the containers advantageously, and automatically, updates a configuration of the plant in response to movement and/or rearrangement of objects in the plant. For example, the configuration can be a file or a set of files or a set of one or more data records in a database. The configuration may represent the totality of equipment (machines, tools, robots, etc.) of the plant which can be used for performing the production process and comprises an indication of the position of each of the equipment. Embodiments of the invention may have the advantage that the configuration is always and fully automatically held up-to date. In case an operator transports a particular tool, machine or machine part from one production unit to the next, the configuration of the plant is automatically updated, because the positioning system will automatically determine the relocation of the tool, machine or machine part and update the configuration of the plant automatically.

In case the above-mentioned node should represent multiple physical objects, including the object with the GPS sensor and further objects without a positioning sensor, the position information of the object with the GBS sensor can be used for monitoring the position of other, physically coupled objects at least approximately even in case these further physical objects do not comprise a position determination sensor.

According to embodiments, the spatial information associated with the object of the respective node includes one or more spatial coordinates of the object. The one or more spatial coordinates correspond to one or more points on a bounding surface of the object and/or inside the bounding surface of the object.

A "bounding surface" of an object as used herein is the surface of the smallest possible 3D wrapper object that completely encloses the entire object. Typically, the 3D wrapper object is a rectangular box. Using a bounding surface of objects instead of the real and typically topologically much more complex surface for performing spatial operations in the database system (distance determination, etc.) may have the advantage that the speed of the spatial operations may tremendously be increased. Due to the limited complexity of wrapper objects, in particular cubes or rectangular boxes, geometrical operations such as distance determination, computation of an intersect area, an intersect volume, a join area, a join volume etc. can be performed with much less CPU capacity that performing these operations on "realistic" object surface representations.

In a further aspect, the invention relates to a method of using an automation system for controlling an automated production process of an industrial plant. The industrial plant including a plurality of equipment for performing the production process. The plurality of equipment is spatially distributed in the industrial plant. The method comprises:
- providing the automation system, the automation system comprising an augmented reality system, the augmented reality system including:
   ∘ a database system having stored data and spatial coordinates associated with respective equipment of the plurality of equipment;
   ∘ augmented reality glasses configured to display the data; and
   ∘ executable program logic coupled to the augmented reality glasses,
- receiving, by the executable program logic, an up-to-date spatial position of a user wearing the augmented reality glasses, from a positioning system,
- determining, by the database system, the data of equipment that are located in a proximity of the up-to-date spatial position of the user,
- receiving, by the executable program logic, the determined data of equipment from the database system;
- controlling, by the executable program logic, the augmented reality glasses to display of at least some of the received data, the displayed data enabling the user to control and/or maintain the automated production process.

### BRIEF DESCRIPTION OF SEVERAL VIEWS OF THE DRAWINGS

The following embodiments of the invention are explained in greater detail, by way of example only, making reference to the drawings in which:
- Fig. 1: illustrates an automation system for controlling an automated production process of an industrial plant, according to an embodiment of the present invention;
- Fig. 2: illustrates an exemplary task instruction, according to an embodiment of the present invention;
- Fig. 3: illustrates an exemplary node of a graph-database, the node representing a task instruction;
- Fig. 4: illustrates a flow chart of a method for operating an automation system;
- Fig. 5: illustrates an exemplary GUI displayed to an "operator" user; and
- Fig. 6: illustrates an exemplary GUI displayed to a "maintenance worker" user;
- Fig. 7: illustrates the use of spatial anchors and shows an avatar of a remote user; and
- Fig. 8: illustrates a coordinate system used for representing of real-world equipment, and local user avatars in a virtual metaverse to a remote operator.

### DETAILED DESCRIPTION OF THE INVENTION

The descriptions of the various embodiments of the present invention have been presented for purposes of illustration and are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

"Industrial plant" or "plant" may refer, without limitation, to any technical infrastructure that is used for an industrial purpose of manufacturing, producing or processing of one or more industrial products, i.e., a manufacturing or production process or a processing performed by the industrial plant. The industrial product can, for example, be any physical product, such as a chemical, a biological, a pharmaceutical, a food, a beverage, a textile, a metal, a plastic, a semiconductor. Additionally, or alternatively, the industrial product can even be a service product, for example, recovery or waste treatment such as recycling, chemical treatment such as breakdown or dissolution into one or more chemical products. Accordingly, the industrial plant may be one or more of a chemical plant, a process plant, a pharmaceutical plant, a fossil fuel processing facility such as an oil and/or a natural gas well, a refinery, a petrochemical plant, a cracking plant, and the like. The industrial plant can even be any of a distillery, a treatment plant, or a recycling plant. The industrial plant can even be a combination of any of the examples given above or their likes.

The infrastructure may comprise equipment or process units such as any one or more of a heat exchanger, a column such as a fractionating column, a furnace, a reaction chamber, a cracking unit, a storage tank, an extruder, a pelletizer, a precipitator, a blender, a mixer, a cutter, a curing tube, a vaporizer, a filter, a sieve, a pipeline, a stack, a filter, a valve, an actuator, a mill, a transformer, a conveying system, a circuit breaker, a machinery e.g., a heavy duty rotating equipment such as a turbine, a generator, a pulverizer, a compressor, an industrial fan, a pump, a transport element such as a conveyor system, a motor, etc.

Further, an industrial plant typically comprises a plurality of sensors and at least one control system for controlling at least one parameter related to the process, or process parameter, in the plant. Such control functions are usually performed by the control system or controller in response to at least one measurement signal from at least one of the sensors. The controller or control system of the plant may be implemented as a distributed control system ("DCS") and/or a programmable logic controller ("PLC").

Thus, at least some of the equipment or process units of the industrial plant may be monitored and/or controlled for producing one or more of the industrial products. The monitoring and/or controlling may even be done for optimizing the production of the one or more products. The equipment or process units may be monitored and/or controlled via a controller, such as DCS, in response to one or more signals from one or more sensors. In addition, the plant may even comprise at least one programmable logic controller ("PLC") for control- ling some of the processes. The industrial plant may typically comprise a plurality of sensors which may be distributed in the industrial plant for monitoring and/or controlling purposes. Such sensors may generate a large amount of data. The sensors may or may not be considered a part of the equipment. As such, production, such as chemical and/or service production, can be a data heavy environment. Accordingly, each industrial plant may produce a large amount of process related data. Those skilled in the art will appreciate that the industrial plant usually may comprise instrumentation that can include different types of sensors. Sensors may be used for measuring one or more process parameters and/or for measuring equipment operating conditions or parameters related to the equipment or the process units. For example, sensors may be used for measuring a process parameter such as a flowrate within a pipeline, a level inside a tank, a temperature of a furnace, a chemical composition of a gas, etc., and some sensors can be used for measuring vibration of a pulverizer, a speed of a fan, an opening of a valve, a corrosion of a pipeline, a voltage across a transformer, etc. The difference between these sensors cannot only be based on the parameter that they sense, but it may even be the sensing principle that the respective sensor uses. Some examples of sensors based on the parameter that they sense may comprise: Temperature sensors, pressure sensors, radiation sensors such as light sensors, flow sensors, vibration sensors, displacement sensors and chemical sensors, such as those for detecting a specific matter such as a gas. Examples of sensors that differ in terms of the sensing principle that they employ may for example be: piezoelectric sensors, piezoresistive sensors, thermocouples, impedance sensors such as capacitive sensors and resistive sensors, and so forth.

The industrial plant may even be part of a plurality of industrial plants. The term "plurality of industrial plants" as used herein is a broad term and is to be given its ordinary and customary meaning to a person of ordinary skill in the art and is not to be limited to a special or customized meaning. The term specifically may refer, without limitation, to a compound of at least two industrial plants having at least one common industrial purpose. Specifically, the plurality of industrial plants may comprise at least two, at least five, at least ten or even more industrial plants being physically and/or chemically coupled. The plurality of industrial plants may be coupled such that the industrial plants forming the plurality of industrial plants may share one or more of their value chains, educts and/or products. The plurality of industrial plants may also be referred to as a compound, a compound site, a "Verbund" or a "Verbund site". Further, the value chain production of the plurality of industrial plants via various intermediate products to an end product may be decentralized in various locations, such as in various industrial plants, or integrated in the Verbund site or a chemical park. Such Verbund sites or chemical parks may be or may comprise one or more industrial plants, where products manufactured in the at least one industrial plant can serve as a feedstock for another industrial plant.

An "automation system" as used herein refers to a system for automated control of process such as, for example, chemical, oil refineries, paper and pulp factories. The automation system can use a network to interconnect sensors, controllers, operator terminals and actuators. It may be based on open standards or on proprietary standards. Process automation may be used for operating power plants and factories in different types of industries more efficiently and safely.

"Production process" refers to any industrial process which when, used on, or applied to the input material provides the product. The product can be, for example, a mechanical product, an electronical product, and/or a chemical product. The production process can thus be any manufacturing or treatment process or a combination of a plurality of processes that are used for obtaining the chemical product. The production process may even include packaging and/or stacking of the product.

The terms "to manufacture", "to produce" or "to process" will be used interchangeably in the context of the production process. The terms may encompass any kind of application of an industrial process to the input material that results in one or more products.

"Chemical product" in this disclosure may refer to any industrial product, such as chemical, pharmaceutical, nutritional, cosmetic, or biological product, or even any of their combination. The chemical product may be either consist entirely of natural components, or it may at least partially comprise one or more synthetic components. Some non-limiting examples of the chemical product are, organic or inorganic compositions, monomers, polymers, foams, pesticides, herbicides, fertilizers, feed, nutrition products, precursors, pharmaceuticals or treatment products, or any one or more of their components or active ingredients. In some cases, the chemical product may even be a product usable by an end-user or consumer, for example, a cosmetic or pharmaceutical composition. The chemical product may even be a product that is usable for making further one or more products, for example, the chemical product may be a synthetic foam usable for manufacturing soles for shoes, or a coating usable for automobile exterior. The chemical product may be in any form, for example, in the form of solid, semi-solid, paste, liquid, emulsion, solution, pellets, granules, or powder.

The production process may be continuous, in campaigns, for example, when based on catalysts which require recovery, it may be a batch chemical production process. One main difference between these production types is in the frequencies occurring in the data that is generated during production. For example, in a batch process the production data extends from start of the production process to the last batch over different batches that have been produced in that run. In a continues setting, the data is more continuous with potential shifts in operation of the production and/or with maintenance driven down times.

"Process parameters" may refer to any of the production process related variables, for example any one or more of, temperature, pressure, time, level, etc. A process parameter may indicate the current state of an equipment, equipment part, a material or manufactured good. According to some embodiments, one or more of the process parameters indicate the operation mode of an equipment or equipment part. A process parameter may be measured by a sensor. Other process parameters may be a desired parameter value or value range and may be set and/or dynamically modified by a user. According to examples, a process parameter can be a numerical or binary signal value, measured during the production process, for example, via the one or more sensors. Preferably, the process parameters are received and stored in association with temporal information indicating the time of measuring the process parameter.

"Input material" or "raw material" may refer to at least one feedstock or unprocessed material that is used for producing the chemical product. The input material may be any organic or inorganic sub- stance or even their combination. Thus, the input material may even be a mixture or it may comprise a plurality of organic and/or inorganic components in any form. In some cases, the input material may even be an intermediate processed material, for example from an upstream processing facility or plant.

A "spatial database system" as used herein is a software application designed to allow the definition, creation, querying, update, and administration of spatial databases.

A "spatial database" as used herein is a database that supports database operations optimized to store and query data that represents objects defined in a geometric space. A spatial database system allows representing simple geometric objects such as points, lines and polygons and optionally also more complex structures such as 3D objects, topological coverages, and/or linear networks. While typical databases are designed to manage various numeric and character types of data, spatial databases comprise additional functionality for processing spatial data objects efficiently. Spatial data objects may also be referred to as "spatial primitives" or "simple geometric objects". The term "geometry" may be used to refer to individual spatial data objects and for aggregations of spatial data objects.

A "spatial database operation" as used herein is a database routine that is configured for analyzing spatial information of one or more spatial data objects. The spatial database operations are typically speed-optimized to efficiently process the spatial data objects by using a spatial index created for a plurality of spatial data objects. For example, a spatial database may support one or more of the following spatial database operations: spatial measurements (e.g. computing the line length, the area of a polygon, the distance between spatial data objects), spatial functions (modifying existing spatial data objects to create new ones, for example by providing a minimum bounding rectangle around them, intersecting spatial data objects, merging spatial data objects); spatial predicates (performing true/false queries about spatial relationships between spatial data objects for checking e.g. if polygons overlap or are within a maximum distance from another spatial data object), and others.

A "streaming database system" as used herein is a database system which is accessible via a subscription-based streaming service. The data inside a streaming database system is often split into two tiers. The raw input, often called "streams," are immutable, append-only sequences of events. They're meant to be a historical record of what happened and when. The second tier is built from watching the streams and constructing summaries, often statistical, about the events. They might, for instance, count the number of times that an event happened each day over the last month or find the average value over each week in a year. The analysis is usually stored in tables that are often similar in structure and behavior to traditional relational databases. Indeed, according to embodiments, the streaming services are connected with and/or are based upon a traditional database for these results. Using a streaming database may have the advantage that the size of the data can be reduced and storage costs can be saved. For example, a parameter value collected by a sensor of an equipment every second may be received via a streaming interface with an average computed over a day. Storing only statistically aggregated parameter values of at least some of the process parameters can make long-term tracking technically feasible.

In a further beneficial aspect, streaming databases make it simpler for developers to integrate the parameter values received via one or more streams, because in contrast to traditional databases where the sequence of INSERT or DELETE events is hidden in an internal journal or ledger, the streams are directly accessible in a streaming database system. Developers can adjust how the streams of new parameter values are statistically aggregated and stored in tabular form. Furthermore, streaming database systems support a subscription-based data retrieval, e.g. for dynamically determining which equipment is in spatial proximity to a user wearing the AR-glasses, whereby the equipment and/or the user may change position. The user may subscribe to a service using his or her current position as argument or condition. The service will continuously and automatically determine if an equipment is in spatial proximity to the user and will cause the executable program logic of the AR glasses to generate and display a GUI with equipment data selectively of equipment in spatial proximity to the user. Each movement of the user wearing the AR glasses may automatically trigger an update of the subscribed streaming service with the new position information of the user. For instance, Oracle Streams, Apache Kafka, or IBM's "Streams" can be used as streaming database systems.

The expression "graph database system" as used herein is a database system that uses graph structures for semantic queries with nodes, edges, and properties to represent and store data. A key concept a graph database system is the graph (or edge or relationship). The graph relates the data items in the store (e.g., equipment and associated task data records, position information, set parameters or measured parameters) to a collection of nodes and edges, the edges representing the relationships between the nodes. The relationships allow data in the store to be linked together directly and, in many cases, retrieved with one operation. Graph databases hold the relationships between data as a priority. Querying relationships is fast because they are perpetually stored in the database. Relationships can be intuitively visualized using graph databases, making them useful for heavily interconnected data. For example, according to embodiments, the graph represents equipment (e.g. machines, tools and/or robots), equipment components and sub-components thereof in multiple different hierarchical layers. Once a user approaches a particular equipment and reaches spatial proximity to this equipment, the graph database system can be used for quickly retrieving not only the data of the one single node representing this particular equipment, but also retrieving data for any equipment component or sub-component (direct child nodes or second, third, or n'th order child nodes) in a single query operation. Hence, once a user is in spatial proximity of the equipment, the executable program logic will receive all relevant parameters of this equipment and its sub-components and may display it via the AR glasses immediately or may cash some of the retrieved data for displaying it later without a further query to the database system. Using a graph database may be particularly advantageous for drill-down analysis for retrieving data relevant for a particular maintenance task for a machine and one or more of its components.

The expression "augmented reality glasses" or "AR glasses" as used herein refer to wearable computer glasses that add information alongside or to what the wearer sees. Superimposing information onto a field of view can be achieved for example through an optical head-mounted display (OHMD) or embedded wireless glasses with an augmented reality overlay. These systems have the capability to reflect projected digital images as well as allowing the user to see through it or see better with it. Some models comprise processors with limited processing capabilities, and which perform only basic tasks, such as serving as a front-end display for a remote system having a greater amount of CPU capacity, as in the case of smart glasses utilizing cellular technology or Wi-Fi. Modern AR glasses are effectively wearable computers which can run self-contained mobile apps. According to preferred embodiments, the AR glasses are handsfree and can communicate with one or more external software programs, e.g., the executable program logic of the AR system, via natural language voice commands, and/or optical sensors in combination with gesture recognition functions.

According to embodiments, AR glasses may collect information from internal or external sensors, e.g., in order to determine the position and/or orientation of the wearer and may be configured to represent a part of the positioning system of the AR system. According to embodiments, the AR glasses support wireless technologies like Bluetooth and/or Wi-Fi for data exchange with other components of the AR system, and/or GPS for position determination. The AR glasses may comprise an acoustic output interface configured to output sound, e.g., the voice of other users and/or alarm messages generated by the AR-system, e.g., by the executable program logic.

The expression "positioning system" as used herein is a monolithic or distributed technical system configured to determine position of an entity, e.g., a user or another physical object. For example, some AR glasses comprise GPS sensors or indoor position sensors, gyroscopes and/or cameras which are configured to continuously acquire data which allows to determine the current position of the user wearing the AR glasses.

The expression "spatial anchors" as used herein is a software function that allows positioning virtual reality objects such as holograms, virtual GUIs or manuals, at defined distance relative to said anchor. The anchor represents a coordinate system which is mapped and bound to the coordinate system of the real world. According to some embodiments, the anchors are created by or with the help of an executable program logic interoperable with the AR glasses, e.g. an augmented reality application. The anchors are then stored in the database system for makding the anchors accessible to other users, e.g. remote users. A virtual reality application configured to create a virtual reality for the remote user can be configured to read the anchor(s) created by the user wearing the AR glasses and to create and display some virtual objects at a defined distance and orientation relative to the anchor. The augmented reality application of the user wearing the AR glasses may do the same. Thereby, the spatial anchor may allow the two users to share the same visual experience. For example, the virtual object displayed at the predefined distance and orientation of the anchor can be a virtual representation of an equipment or equipment part or of a GUI designed for allowing a user to control the equipment. According to one example, the spatial anchors can be implemented using Microsoft Azure technology.

The term "avatar" as used herein is a graphical representation of a user or the user's character or persona. It may take a two-dimensional or a three-dimensional form when displayed via AR-glasses.

The expression "in the vicinity" or "in proximity" of a user (or other object/entity) or "proximate to a user" can mean, for example, within a user-defined or predefined maximum distance from this user (or from the other object/entity). For example, the maximum distance can be less than 10 m, or less than 5 m, or less than 2 m, or less than 1m. The maximum distance may also be specified in the form of a 3D object, e.g. a hemisphere or a cylinder, so the distance threshold for "proximate" and "non-proximate" objects may be different for different dimensions within the 3D coordinate system of the real world.

"Computing unit" may comprise, or it may be, a processing means or computer processor such as a microprocessor, microcontroller, or their like, having one or more processing cores. In some cases, the computing unit may at least partially be a part of the equipment, for example it may be a process controller such as programmable logic controller ("PLC") or a distributed control system ("DCS"), and/or it may be at least partially a remote server. Accordingly, the computing unit may receive one or more input signals from one or more sensors operatively connected to the equipment. If the computing unit is not a part of the equipment, it may receive one or more input signals from the equipment. Alternatively, or in addition, the computing unit may control one or more actuators or switches operatively coupled to the equipment. The one or more actuators or switches operatively may even be a part of the equipment.

"Memory storage" may refer to a device for storage of information, in the form of data, in a suitable storage medium. Preferably, the memory storage is a digital storage suitable for storing the information in a digital form which is machine-readable, for example digital data that are readable via a computer processor. The memory can be a transitory or non-transitory storage of information. The memory storage may thus be realized as a digital memory storage device that is readable by a computer processor. Further preferably, the memory storage on the digital memory storage device may also be manipulated via a computer processor. For example, any part of the data recorded on the digital memory storage device may be written and/or erased and/or overwritten, partially or wholly, with new data by the computer processor.

Accordingly, the computing unit may be able to manipulate one or more parameters related to the production process by controlling any one or more of the actuators or switches and/or end effector units, for example via manipulating one or more of the equipment operating conditions. The controlling is preferably done in response to the one or more signals retrieved from the equipment.

"Interface" may be a hardware and/or a software component, either at least partially a part of the equipment, or a part of another computing unit where the object identifier is provided. In some cases, the interface may also connect to at least one network, for example, for interfacing two pieces of hardware components and/or protocol layers in the network. For example, the interface may be an interface between the equipment and the computing unit. In some cases, the equipment may be communicatively coupled to the computing unit via the network. Thus, the interface may even be a network interface, or it may comprise the net- work interface. In some cases, the interface may even be a connectivity interface, or it may comprise the connectivity interface.

"Network interface" refers to a device or a group of one or more hardware and/or software components that allow an operative connection with the network.

"Connectivity interface" refers to a software and/or hardware interface for establishing communication such as transfer or exchange or signals or data. The communication may either be wired, or it may be wireless. Connectivity interface is preferably based on or it supports one or more communication protocols. The communication protocol may a wireless protocol, for example: short distance communication protocol such as Bluetooth^{®}, or WiFi, or long communication protocol such as cellular or mobile network, for example, second-generation cellular network or ("2G"), 3G, 4G, Long-Term Evolution ("LTE"), or 5G. Alternatively, or in addition, the connectivity interface may even be based on a proprietary short distance or long distance protocol. The connectivity interface may support any one or more standards and/or proprietary protocols. The connectivity interface and the network interface may either be the same unit or they may be different units.

"Network" discussed herein may be any suitable kind of data transmission medium, wired, wireless, or their combination. A specific kind of network is not limiting to the scope or generality of the present teachings. The network can hence refer to any suitable arbitrary interconnection between at least one communication endpoint to another communication endpoint. Network may comprise one or more distribution points, routers or other types of communication hardware. The interconnection of the network may be formed by means of physically hard wiring, optical and/or wireless radio-frequency methods. The network specifically may be or may comprise a physical network fully or partially made by hardwiring, such as a fiber-optical network or a network fully or partially made by electrically conductive cables or a combination thereof. The network may at least partially comprise the internet.

"Equipment" may refer to any one or more assets within the industrial plant. As non-limiting examples, the equipment may refer to any one or more, or any of their combination of,computing units or controllers such as programmable logic controller ("PLC") or distributed control system ("DCS"), sensors, actuators, end effector units, transport elements such as conveyor systems, heat exchangers such as heaters, furnaces, cooling units, reactors, mixers, millers, choppers, compressors, slicers, extruders, dryers, sprayers, pressure or vacuum chambers, tubes, bins, silos and any other kind of apparatus which is used directly or indirectly for or during production in the industrial plant. Preferably, the equipment refersspecifically to those assets, apparatuses or components which are involved directly or indirectly in the production process. More preferably, those assets, apparatuses or components which can influence the performance of the chemical product. An equipment may be buffered, or they may be unbuffered. Moreover, the equipment may involve mixing or no mixing, separation or no separation. Some non-limiting examples of unbuffered equipment without mixing are, conveyor system or belt, extruder, pelletizer, and heat exchanger. Some non-limiting examples of buffered equipment without mixing are, buffer silo, bins, etc. Some non-limiting examples of buffered equipment with mixing are, silo with mixer, mixing vessel, cutting mill, double cone blender, curing tube, etc. Some non-limiting examples of unbuffered equipment with mixing are, static or dynamic mixer, etc. Some non-limiting examples of buffered equipment with separation are, column, separator, extraction, thin film vaporizer, filter, sieve, etc. The equipment may even be or it may include a storage or packaging element such as, octabin filling, drum, bag, tank truck.

"Equipment operating conditions" refers to any characteristics or values that represent the state of the equipment, for example, any one or more of, setpoint, controller output, production sequence, calibration status, any equipment related warning, vibration measurement, speed, temperature, fouling value such as filter differential pressure, maintenance date, etc.

"Parameter" in this context refers to any relevant physical or chemical characteristic and/or a measure thereof, such as temperature, direction, position, quantity, density, weight, color, moisture, speed, acceleration, rate of change, pressure, force, distance, pH, concentration and composition. The parameter may also refer to a presence or lack thereof of a certain characteristic.

"Actuator" refers to any component of that is responsible for moving and controlling a mechanism related to an equipment such as a machine, directly or indirectly. The actuator may be a valve, motor, a drive, or their likes. The actuator may be operable electrically, hydraulically, pneumatically, or any of their combination.

"Computer processor" refers to an arbitrary logic circuitry configured for performing basic operations of a computer or system, and/or, generally, to a device which is configured for performing calculations or logic operations. In particular, the processing means or computer processor may be configured for processing basic instructions that drive the computer or system. As an example, the processing means or computer processor may comprise at least one arithmetic logic unit ("ALU"), at least one floating-point unit ("FPU"), such as a math coprocessor or a numeric coprocessor, a plurality of registers, specifically registers configured for supplying operands to the ALU and storing results of operations, and a memory, such as an L1 and L2 cache memory. In particular, the processing means or computer processor may be a multicore processor. Specifically, the processing means or computer processor may be or may comprise a Central Processing Unit ("CPU"). The processing means or computer processor may be a ("CISC") Complex Instruction Set Computing microprocessor, Reduced Instruction Set Computing ("RISC") microprocessor, Very

Long Instruction Word ("VLIW') microprocessor, or a processor implementing other instruction sets or processors implementing a combination of instruction sets. The processing means may also be one or more special-purpose processing devices such as an Application-Specific Integrated Circuit ("ASIC"), a Field Programmable Gate Array ("FPGA"), a Complex Programmable Logic Device ("CPLD"), a Digital Signal Processor ("DSP"), a network processor, or the like. The methods, systems and devices described herein may be implemented as software in a DSP, in a micro-controller, or in any other side-processor or as hardware circuit within an ASIC, CPLD, or FPGA. It is to be understood that the term processing means or processor may also refer to one or more processing devices, such as a distributed system of processing devices located across multiple computer systems (e.g., cloud computing), and is not limited to a single device unless otherwise specified.

"Computer-readable data medium" or carrier includes any suitable data storage device or computer readable memory on which is stored one or more sets of instructions (e.g., soft- ware) embodying any one or more of the methodologies or functions described herein. The instructions may also reside, completely or at least partially, within the main memory and/or within the processor during execution thereof by the computing unit, main memory, and processing device, which may constitute computer-readable storage media. The instructions may further be transmitted or received over a network via a network interface device.

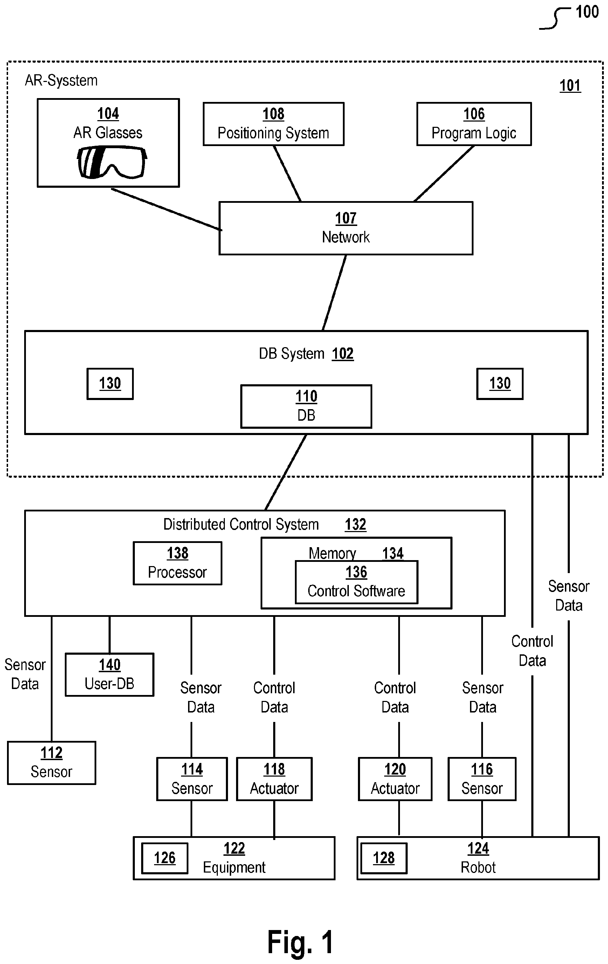

Fig. 1 illustrates an automation system 100 for controlling an automated production process of an industrial plant. The industrial plant includes a plurality of equipment 122, 124 for performing the production process. In one embodiment, the plurality of equipment are spatially distributed in the industrial plant.

The automation system includes an augmented reality system including a database system 102 configured to store data and spatial coordinates associated with respective equipment of the plurality of equipment, augmented reality (AR) glasses 104 configured to display the data, and executable program logic 106 coupled to the augmented reality glasses 104. For example, the AR glasses can be HoloLens from Microsoft, or iOS-based devices supporting e.g. ARKit, or Android-based devices supporting ARCore or similar libraries. The executable program logic 106 can be integrated into the AR glasses or may be at least partially external to the glasses and operatively coupled to the AR glasses via a wireless data exchange interface. The program logic may be used to generate GUIs and/or render digital geometric objects for display via the AR glasses. In addition, the executable program logic may comprise interfaces for exchanging data with the database system 102 and a positioning system 108. In one embodiment, the augmented reality system also includes a network 107 for communicatively coupling the AR glasses 104 to the database system 102. The augmented reality glasses 104 are associated with a human operator (i.e., an AR user), and includes components, such as electronics, optics (e.g., displays, lenses, light sources), power source, local memory, processing units, and executable software, such as AR apps known to those of skill in the art, to enable the AR glasses to provide an enhanced (i.e., augmented) vision of the plant environment as viewed through the glasses by a user. The AR glasses may also comprise an acoustic output interface, e.g., integrated loudspeakers, and/or a microphone for enabling the user wearing the glasses to communicate via voice with one or more remote users.

In one embodiment, the AR glasses 104 provide an overlay of the data, also referred to as AR objects or "virtual objects", representative of data such as text, photos, videos, holograms, GUIs, technical handbooks, and/or graphs, on a display of the AR glasses as the user looks through the display of the AR glasses at different objects in the plant, such as different pieces of equipment, sensors, actuators, plant framework (e.g., floors, ceilings, walls, scaffolding, storage areas, etc.). In one embodiment, the type and content of the AR objects displayed depend upon characteristics of the user of the AR glasses, the location of the user in the plant and/or the line of sight of the user, as will be described in further detail below.

In one embodiment, the executable program logic 106 is configured to receive an up-to-date spatial position of the user from a positioning system, such as positioning system 108. In one embodiment, the positioning system 108 is configured for sensing the spatial position of the user in the plant.

According to an embodiment, the positioning system 108 comprises one or more sensors for dynamically identifying the position and/or orientation of the user wearing the AR glasses. For example, the positioning system may comprise a GPS module or an indoor-positioning system. In addition, or alternatively, the positioning system may comprise one or more cameras which are used for capturing gestures of the hands and arms of the user while interacting with virtual Objects such as GUIs displayed via the AR glasses. According to embodiments, the positioning system 108 is configured to generate and/or use a spatial mapping mesh covering at least a portion of the plant. For example, spatial mapping, via use of a spatial mapping mesh, enables anchoring AR objects on or near real surfaces of objects in the plant, such as surfaces of equipment, sensors, actuators, or other surfaces in the plant, including surfaces of plant infrastructure. Embodiments of the present invention include use of commercially available spatial mapping mesh positioning systems, some of which are commercially available as apps to be executed by the AR glasses 104 and/or program logic 106. One such system is World Locking Tools, available as an open-source code.

In addition, or alternatively, embodiments of the present invention include pre-built spatial maps (i.e., spatial meshes) that define surfaces of objects in the plant, where each surface of an object has a plurality of mesh points to which respective AR objects can be placed or locked, and by relating the coordinates of a locking mesh point to the AR coordinates in a potentially moving AR coordinate system of the AR glasses, the AR object appears locked in position relative to its position with respect to the plant object to which is corresponds. In one embodiment, one or more spatial surfaces of objects in the plant are represented by a triangle mesh, to which AR objects may be anchored. Thus, an AR object put in position relative to physical world features will stay fixed relative to those features, independent of movement of the user or direction of view of the user through the AR glasses. For example, Azure Spatial Anchors Technology of Microsoft may be used for developing mixed reality applications which support AR glasses of various manufacturers. Azure Spatial Anchors enables developing mixed reality applications which designate precise points of interest, so called spatial anchors, and to recall those points of interest from one or more supported devices such that multiple local and/or remote users can share the same virtual coordinate system and virtual objects included therein. According to an embodiment, the spatial mapping mesh includes or is connected with spatial anchors. At least some of the spatial anchors can be interconnected, and form, for example, one or more groups of interconnected spatial anchors having predefined relative distances from each other. In one embodiment, one or more spatial anchors connected to any particular spatial anchor are defined to be one or more nearest neighbour spatial anchors. In one embodiment, each spatial anchor relates a coordinate system of the augmented reality system for the display of the data (e.g., an AR object) to the real-world coordinate system. In other words, the positioning system 108 can be configured to merge one or more spatial anchors as viewed through the AR glasses (i.e., the coordinates of the one or more spatial anchors in an augmented reality coordinate system associated with the AR glasses), with the real-world spatial coordinates of the real-world objects to which the spatial anchors belong, as stored in the database system in the form of a spatial mapping mesh, to obtain the real-world spatial position of the user of the AR glasses in the plant.

In another embodiment, the positioning system 108 is an indoor positioning system. The AR glasses 104 and/or the program logic 106 are configured to receive signals from Bluetooth beacons distributed throughout the plant and determine location based on Received Signal Strength Indication (RSSI) of the received Bluetooth Beacon signals. Alternatively, and particular advantageous in plant environments having large amounts of obstacles (i.e., non-open-floor layouts) that may result in multipath effects, shadow fading and signal blockage, the AR glasses 104 and/or the program logic 106 are configured to receive cellular network and Bluetooth Beacon signals, as described in "Indoor Positioning System With Cellular Network Assistance Based on Received Signal Strength Indication of Beacon," December 30, 2019, p. 6691-6703, IEEE Access, which is incorporated herein by reference. In this embodiment, RSSI values of the received Bluetooth Beacon signals are signal processed (missing values replaced and outlier values removed via filtering) for generating a smoother signal over range. Then, the cell in which the AR glasses are located is determined according to the strongest four RSSI values, and a weighted multi-point positioning algorithm with cellular network assistance is used to calculate the real-time location of the AR glasses (i.e., the location of the AR user).

In yet another embodiment, the positioning system 108 is a cellular positioning system based on the 5G mobile radio standard. The 5G positioning system offers extremely high network reliability and high positioning accuracy. In a further embodiment, the positioning system is a GPS positioning system, where the AR glasses include a GPS receiver and corresponding software and/or GPS app configured to determine the spatial position of the AR glasses.

The executable program logic 106 is further configured to receive data, from the database system 102, corresponding to equipment that are located in a proximity of the up-to-date spatial position of the user, and control the augmented reality glasses 104 for display of at least some of the received data. In one embodiment, the executable program logic 106 is configured to receive data, from the database system 102, corresponding to any objects of the plant that is located in a proximity of the up-to-date spatial position of the user.

According to yet another embodiment, the database system 102 is a graph database system, a spatial database system and/or a streaming database system. The database system 102 also includes a database 110.

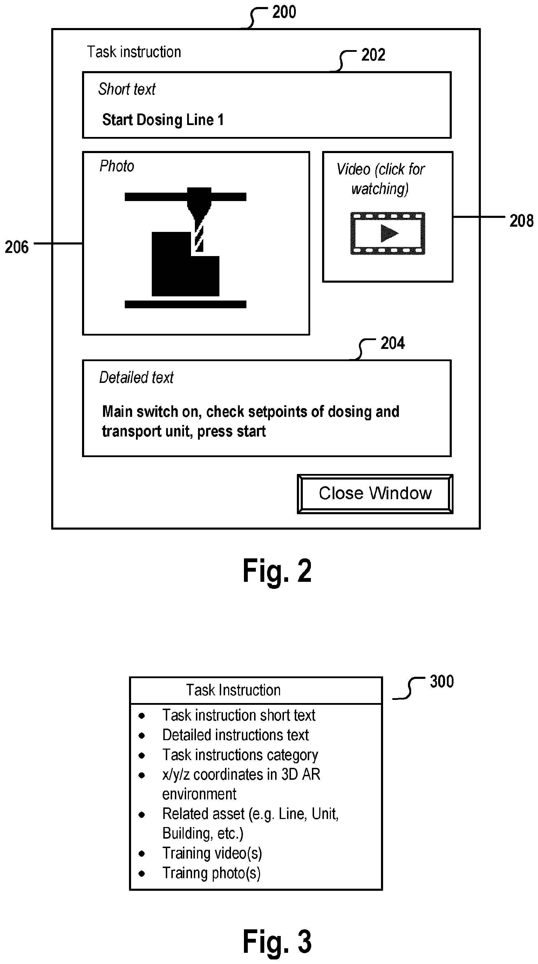

In one embodiment, the database system 102 is a spatial database system and the database 110 is a spatial database configured to store respective data based on spatial coordinates associated with the respective data, and in which the respective data is searched for and retrieved based on the spatial coordinates associated with the respective data. For example, the spatial database system 102 of the present invention stores a plurality of spatial coordinates, where each spatial coordinate includes corresponding data that relates to the object in the plant located at that spatial coordinate. For example, given a particular equipment of the plant, e.g., a pump, the spatial database stores one or more spatial coordinates of the pump, an optional description of each spatial coordinate (e.g., spatial coordinates 1-4 represent the four corners of the pump on the floor of the plant, spatial coordinate 5 represents a high point of the pump, etc.), and data associated with the pump, e.g., a task instruction for the pump. By way of an exemplary embodiment, the task instruction (for the pump) may include, but is not limited to: one or more of training videos, one or more photos and/or training photos, a related asset (e.g., other equipment or plant objects that may house the pump or operate in conjunction with the pump, such as equipment providing raw materials to the pump or accepting the product or outflow of the pump), a short task instruction text, a detailed task instruction text, and a listing of categories of task instructions. Task instructions will be discussed further below in conjunction with Fig. 2. In particular, the database system 102 can be a graph database system which supports fast geometric operations, i.e. a spatial graph database, which supports a fast drill-down analysis of equipment-related data, including a fast determination of distances to other objects and/or the user.

In one embodiment, the executable program logic 106 is configured to perform a query of the spatial database 110, based upon the up-to-date spatial position, for retrieving from the spatial database 110 the data of equipment that are in the proximity of the up-to-date spatial position of the user. The query can be, for example, a conventional SQL query repeated multiple times using the current position of the user as argument or can be a subscription to a streaming service which is updated once the user changes his or her position. In one embodiment, proximity of location is defined by a user-adjustable proximity parameter of the executable program logic 106. A user may set the proximity parameter to be any radius as measured from the spatial position of the user, or any radius the defines a hemisphere with a flat surface of the hemisphere positioned on a floor of the plant and centered on the up-to-date spatial position of the user.

In another embodiment, the executable program logic 106 is configured to perform a query of the spatial database 110, based upon the up-to-date spatial position of the use and on a field-of-view of the user through the AR glasses, for retrieving from the spatial database 110 the data of equipment that are located in the proximity of the up-to-date spatial position and within the field of view of the user of the AR glasses. For example, proximity of location is defined by a user-adjustable proximity parameter of the executable program logic 106. A user may set the proximity parameter to be any radius as measured from the up-to-date spatial position of the user, or any radius the defines a hemisphere with a flat surface of the hemisphere positioned on a floor of the plant and centered on the spatial position of the user. In response to the query, the executable program logic 106 receives the data of equipment that are located within a 3D cone defined by the current field of view of the AR glasses and having a length defined by the user-defined radius.

In one embodiment, the data of equipment that are located in the proximity of the up-to-date spatial position of the user and optionally within the field of view of the user of the AR glasses is received by the executable program logic, even if such data is blocked from view of the user of the AR glasses by obstacles in the plant. Thus, if a second equipment is partly or fully hidden behind a first equipment, the executable program logic 106 is configured to control the augmented reality glasses 104 for display of data associated with the second equipment (i.e., second object) by placing the data associated with the second equipment within the vicinity of the second equipment such that is not obstructed from view by the first equipment. In one embodiment, the data associated with the second equipment is displayed with a smaller font and/or smaller images and/or a pointer that points in the direction of the hidden or partly hidden second equipment to indicate that the data is associated with equipment that is at least partly hidden from view of the user of the AR glasses 104.

In another embodiment, the spatial database 110 of the spatial database system 102 is accessible via a subscription-based streaming service. The executable program logic 106 is configured to receive, via the streaming service and from the spatial database 110, the data of equipment that are located in the proximity of the up-to-date spatial position of the user of the AR glasses. That is, in contrast to retrieving from the spatial database 110 the data of equipment that are located in the proximity of the up-to-date spatial position of the user via a query of the spatial database 110, as discussed above, the executable program logic 106 and the spatial database 110, according to this embodiment, are configured so that the executable program logic 106 receives, via the services of any commercially available third party streaming service, the data of equipment that are located in the proximity of the up-to-date spatial position of the user based upon the up-to-date spatial position of the user being communicated to the streaming service provider. The spatial database system 102, including the spatial database 110, which is accessible via any subscription-based streaming service, may also be referred to as streaming spatial database system.

According to some embodiments, the database system 102 is a graph database system and the database 110 is a graph database which supports fast geometric operations. The database system hence can be regarded as a combined graph database and spatial database. The graph database is configured such that the nodes represent objects of the physical world, in particular equipment and equipment components or sub-components, and that the edges represent the real-world spatial and organizational relationships of these equipment, components and sub-components. Equipment- and component-associated data such as manuals or GUIs for setting process parameters or position information of said equipment or components may be stored, searched, and retrieved based on spatial coordinates associated with the respective data, and the executable program logic 106 is configured to perform a query of the graph database, based upon an up-to-date spatial position and optionally a field of view of the AR glasses 104, for retrieving from the graph database the data of equipment that are located in the proximity of the up-to-date spatial position of the user and optionally within a field of view (e.g.,, within a field-of-view 3D cone) as defined with reference to a 3D cone having a vertex based at the AR glasses a longitudinal axis of symmetry pointing in the direction of view of the user of the AR glasses.

According to some embodiments, the graph database 110 of the graph database system 102 is accessible via a subscription-based streaming service, as discussed above in conjunction with the spatial database. In this embodiment, the executable program logic 106 is configured to receive, via the streaming service and from the graph database 110, the data of equipment that are located in the proximity of the up-to-date spatial position of the user of the AR glasses 104. The graph database system 102, including the graph database 110, which is accessible via any subscription-based streaming service, may also be referred to as streaming graph database system.

The graph database (and the streaming graph database) can be configured such that objects of the plant are stored as interconnected nodes of a graph, where each node includes one or more spatial coordinates of the object in the plant and data corresponding to the object. Given the architecture of the graph database, the graph database (and the streaming graph database) of the present invention enables fast search and access to data associated with a given object in the plant along the topology of the graph, thereby evaluating the spatial coordinates of the user of the AR glasses in the plant.

In one embodiment, an object in the plant includes, but is not limited to, one or more sensors, of which sensors 112, 114 and 116 are exemplary embodiments, one or more actuators, of which actuators 118 and 120 are exemplary embodiments, at least one equipment 122, 124, e.g., a machine (e.g. a robot or stationary manufacturing machine), a machine component or sub-component, a tool or a, and/or and raw material 126 and 128. In some embodiments, one or more actuators and/or sensors, such as actuators 118, 120 and sensors 114, 116, are connected to plant equipment 122 124 for actuating the equipment and/or components of the equipment for sensing parameters associated with the equipment and/or raw materials 126, 128 being processed by the equipment. Parameters that may be sensed include, but are not limited to, pressure, temperature, humidity and parameters associated with movement of equipment (e.g. a machine such as a stationary machine or a robot) or components of equipment, or raw materials being processed or to be processed by the equipment (e.g., conveyor speeds, speed of fluid flow in pipes, rotational speeds of mixers, movement of automated components, etc.). The scope of the present invention also includes sensors, such as sensor 112 not connected to any plant equipment, for measuring ambient plant conditions, such as temperature inside the plant, ambient lighting or particulate concentration in the air, for example. The scope of the present invention also includes objects in the plant, such as equipment 122 and robot 124, that are not connected to any sensors or actuators. Plant equipment may also include inert (i.e., passive) structural components of the plant (i.e., plant components, such as trellises, walls, ceilings, heaters, air conditioners and supporting structures, for example, that are not engaged in the processing of raw or intermediate materials).

In another embodiment, the database system 102 optionally includes isolated, virtual user spaces, so called "containers" 130. The containers may be implemented, for example, as docker containers. Each container 130 is associated with a respective node and is configured to continuously determine the current spatial information associated with the object of the respective node (e.g. the object's position and/or orientation) and to update the position information of this object in the database 110 immediately. For example, each container may comprise a software function which is interoperable with the positioning system 108 and is configured to receive current position information of the respective object continuously. In addition, or alternatively, one or more of the containers may comprise a software function which is interoperable with one or more position determination sensors attached to the object represented by the node associated with said container and may receive position information directly from the position determination sensors.

According to preferred embodiments, the database 110 or another data storage repository comprises a configuration of the plant which specifies the type and position of a plurality of physical objects constituting the plant, e.g. the equipment, equipment parts and optionally also raw materials and/or products. The containers 130 in combination with the position sensors and/or the position determination system 108 advantageously enable the fully automated updating of the configuration of the plant in response to any movement and/or rearrangement of objects in the plant. For example, robots may move about the plant and components of automated systems may also move to different positions as part of their operation. As the containers are isolated from each other, each container is "a standardized unit of software" and includes all its libraries and dependencies required by all software programs running in the container, including the automated position-determination and position information updating functions related to a respective object of the plant, so that the software within the container can reliably be executed regardless of architecture of the database system and regardless of the status of other containers and respective objects.

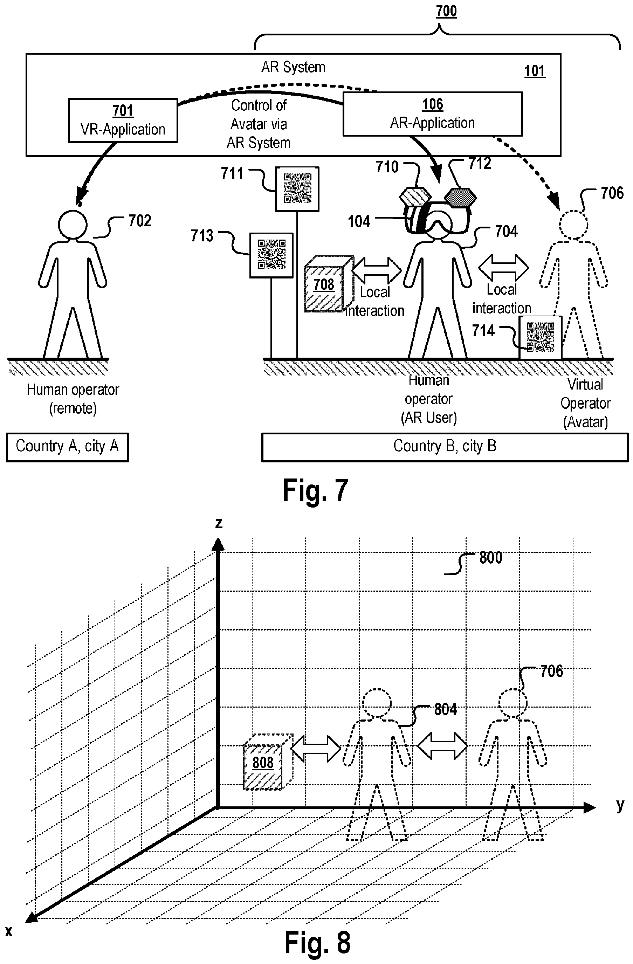

According to some embodiments, e.g. the embodiment depicted in Figure 1, the at least one equipment comprises one or more robots. One or more of the robots can be configured to perform one or more tasks in a manufacturing process, e.g. transporting raw materials to a machine or cutting or gluing material. In addition, or alternatively, one or more of the robots can be configured to move and act as a physical representative of a remote user, e.g. of a human operator 702 depicted in Figure 7. The robot can comprise an interface for receiving control commands from a robot-external robot-control module, whereby the control commands determine the position, orientation, movement or tasks executed by the robot. According to some examples, the control commands are adapted to control the movement, position and/or orientation of the robot such that the movement, position and/or orientation of robot corresponds to and reflects the movement, position and/or orientation of an avatar of the remote user within the coordinate system associated with the augmented reality glasses.

According to some examples, a robot representing a remote user and acting as a physical representation of the remote user comprises one or more sensors such as cameras and microphones which are configured to capturing sensor data (e.g. images, videos, captured audio signals) and submit the sensor data to a virtual reality application 701 (see Figure 7) to enable the virtual reality application to generate a virtual reality as a function of the sensor data such that the remote user sees the images captured by the camera of the robot and hears the acoustic signals captured by the robot's microphone in real-time. According to preferred embodiments, the virtual reality application 701 and the robot-control module are configured to interoperate such that a bidirectional real-time synchronization between the virtual reality presented to the remote user and the physical environment of the robot is accomplished: a movement of the remote user (or at least the remote user's head triggers a corresponding movement of the robot, and the optic and acoustic signals acquire by the robot's sensors are provided to the VR application and used by the VR application for creating and displaying and/or acoustically outputting a virtual world to the remote user, whereby at least a part of the virtual world reflects the acquired acoustic and optic signals.

According to some examples, the robot comprises a first interface for receiving control commands from a robot-control module of the control system 132 and for sending sensor data to the control system 132. This may have the advantage that the control system 132 which may be configured for orchestrating multiple equipment during a manufacturing process may use and control the robot for performing specific tasks of the manufacturing process.

According to some examples, the robot comprises a second interface for receiving control commands from the AR-system 101, e.g. from an AR application 106 and/or from a VR application 701 comprised in the AR system (as depicted e.g. in Figure 7). For example, the AR-system 101 may also comprise a robot-control module configured to receive sensor data from the robot and/or to send control commands to the robot for controlling the movement, orientation, position of the robot and/or the task to be execute by the robot. The current position and orientation of the robot is continuously reported to and stored in the database 110. If the robot changes position and the updated coordinates of the robot are stored in the database, this event may trigger the displaying or hiding of a virtual object in the AR glasses of a local user. This may have the advantage that the robot is seamlessly integrated via the first interface into the manufacturing process orchestrated by the control system, and is also integrated in the world of virtual objects crated by an AR application or a VR application. In some examples, the robot may comprise a conflict resolution module for resolving conflicts which may be caused by incompatible control commands received via the first and the second interface. For example, the conflict resolution module may resolve conflicts by overriding or ignoring conflicting commands provided by the VR application of a remote user, and rather executing the conflicting control commands received via the first interface. The database system 102 is also considered to store position information and other data being descriptive of the physical objects of the plant such that the data in the database system represents a digital twin, in the sense that the database system 102 is configured to compute or allows computation by the executable program logic 105 a complete replica of the plant and its components. The virtual replica of the plant may include all plant objects, or alternatively those plant objects that have an impact on the production process and may include the one or more real-world spatial coordinates associated with each plant object, as well as the data corresponding to each plant object.

According to another embodiment, the spatial information associated with the object of the respective node includes one or more spatial coordinates of the object. For example, in further embodiments, the one or more spatial coordinates correspond to one or more points on a bounding surface of the object and/or inside the bounding surface of the object. The bounding surface of an object is defined to be an outside surface of a wrapper object comprising the object. A spatial coordinate inside the bounding surface may be, for example, the center of mass of the object or a geometrical center of the object. The wrapper object may be a rectangular 3D box or cube or a sphere.

In another embodiment of the invention, the data stored in a database system includes one or more task instructions associated with the respective equipment.

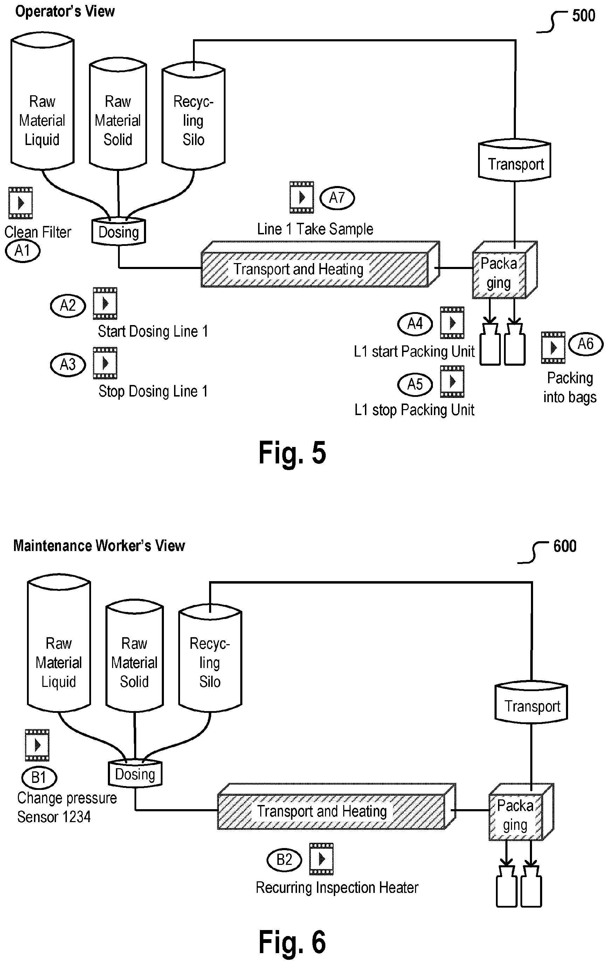

Fig. 2 illustrates an exemplary task instruction 200 (i.e., an exemplary AR object, as viewed by the user through the AR glasses), according to an embodiment of the invention. The task instruction AR object 200 represents the task instruction "Start Dosing Line 1" (A2) which is part of an operator's view through the AR glasses depicted in Figure 5.

The task instruction, as visualized (i.e., displayed) by the AR glasses and superimposed on a view of the plant as seen by a user through the AR glasses, includes, but is not limited to, one or more of a short text 202, a detailed text 204, a photo 206, and/or a video icon 208. In one embodiment, the program logic 106 relates the spatial coordinate (defined with respect to a real-world coordinate system) stored in the database and linked to (i.e., the corresponds to) the task instruction of the respective equipment, to a spatial coordinate system used by the AR glasses for displaying virtual objects (in the following "AR glasses coordinate system"), and anchors the task instruction to the spatial coordinate defined with respect to said coordinate system. In one embodiment, the AR glasses coordinate system to which the task instruction is anchored is an anchor point of the mesh network that covers (i.e., defines) the respective equipment, and the program logic 106 continuously updates the coordinates of the virtual objects within the AR glasses coordinate system such that the display of the task instruction does not move when the user of the AR glasses moves or changes a direction of view.

In further embodiments, the contents of the task instruction contain texts, photos and videos that provide information about the respective equipment, such as operation parameters, including, for example, maximum and minimum values of operational parameters, maintenance requirements and/or history, raw materials used and product produced, photos of the respective equipment to which the task instruction corresponds, etc. In one embodiment, if the task instruction includes a video icon, the user may start the video by pointing a finger or an object such as a pointer to the display of the video icon as seen through the AR glasses, and the program logic 106, in response to detecting the pointer or finger, executes (i.e.., starts) the video. In one embodiment, the pointer or finger is partly covered with a material that reflects a particular wavelength, such as a narrow-band wavelength, and the program logic is configured to initiate execution of the video upon reception of this wavelength for a minimum amount of time. For example, if a pointer is positioned at the video icon for at least 3 seconds, the video is executed by the program logic 106.

In a further embodiment, the equipment includes machines (e.g., machines that process raw materials or intermediate products, such as pumps, mixers, material conveyors (i.e., conveyor belts, pipes, etc.), ovens, automated systems or components of automated systems, robots and/or robotic systems, spectrometers, chromatographers, etc.), as well as passive plant equipment, such as floors, wall, ceilings, housing units, trellises, stands, etc.

Referring back to Figure 1, the automation system further includes a distributed control system 132 coupled to the database system 102. The distributed control system (DCS) 132 is further coupled to the sensors 112, 114, 116, actuators 118, 120, equipment 122, and robot 124, and is configured for controlling operation of the sensors 112, 114, 116, actuators 118, 120, equipment 122 and/or robot 124 and/or receiving information from the sensors 112, 114, 116. In one embodiment, the DCS 132 includes a memory 134 configured to store one or more process parameters corresponding to the equipment 122 and/or robot 124 and process control software 136, and a processor 138 configured to execute the process control software 136 for automatically controlling the production process in the plant. For example, the processor 138 may be configured to execute the process control software for automatically controlling the production process based on measurement signals received from one or more sensors 112, 114, 116 and control signals sent to one or more actuators 118, 120.

The process parameters indicate the current state of the production process of the plant, such as operational parameters of the equipment, including status of the equipment (e.g., indication of faults) and values for various equipment parameters, such as flow rates, pressure, temperature, etc.

The sensors are configured to measure the one or more process parameters of the equipment or parameters of the plant itself, such as ambient environmental parameters, and the actuators are coupled to one or more equipment 122 and/or robots 124 for controlling process parameters of the equipment and/or robots.

In another embodiment, the automation system further includes a user database 140 coupled to the DCS 132. The user database 140 is configured to store user information associated with the production process. For example, in one embodiment, the user information includes user IDs, user roles and/or user privileges. In one embodiment, the program logic 106 controls the content of the AR visualization (i.e., which task instructions to display for a particular user, if any, and/or what content of each task instruction to display for the particular user) for display in the AR glasses for a particular user of the AR glasses based not only upon the spatial location of the user, but also upon user information (corresponding to the particular user) received from the user database 140 by the program logic 106. That is, the program logic 106 "filters" the received task instructions and/or content of the task instructions based upon the user of the glasses, as indicated by the user information received from the user database 140.

Thus, in one embodiment of the invention, the executable program logic 106 is configured to receive user credentials, via, for example, a user interface (not shown) of the AR glasses, or alternatively via a smart phone, other portable devices, or via a scanning device that scans personal characteristics of the potential user, such as images of the retina or fingers. The user credentials may be entered by the user into the automation system via a wireless or wired connections, using, e.g., a keyboard or voice commands, or the user credentials may be received by the automation system via a scanning device. After receipt of the user credentials, the program logic 106 authenticates the user based upon matching the received user credentials with, for example, a user ID of the user IDs.

Figure 3 illustrates an exemplary node 300 of a graph database, the node representing a task instruction which can be graphically represented as AR object as depicted in Figure 2.

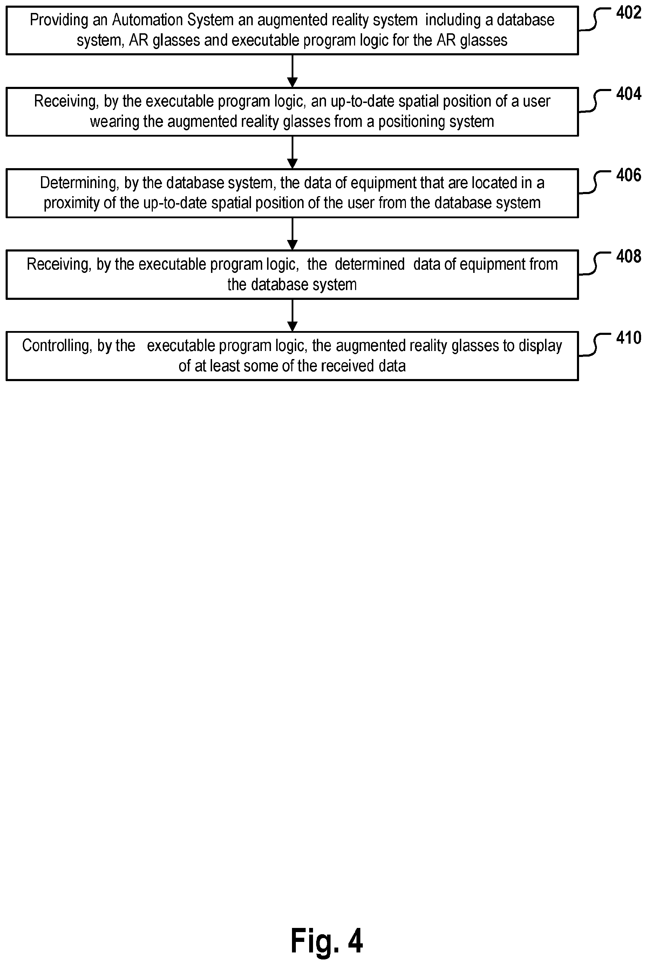

Figure 4 illustrates a flow chart of a method for operating an automation system. For example, the method can be performed based on the automation system depicted in Figure 1. The method comprises a step 402 of providing the automation system. The automation system comprises an augmented reality system including a database system 102 having stored data and spatial coordinates associated with respective equipment of the plurality of equipment, augmented reality glasses 104 configured to display the data, and executable program logic 106 operatively coupled to the augmented reality glasses as described for example with reference to Figure 1. The augmented reality system may comprise further component, e.g., the control system 132 and/or one or more of the equipment.

Next in step 404, the executable program logic 106 receives an up-to-date spatial position of a user wearing the AR glasses from the positioning system 108. The position information may be received via a network 107 as depicted in Figure 1. In other embodiments, the program logic 106 and the positioning system 108 may be integral components of the AR glasses and the position information of the user may be received via a local interface, e.g., a bus.

Next in step 406, the database system determines the data of the one(s) of the equipment which are proximate to the up-to-date spatial position of the user wearing the glasses. For example, the determination can be performed automatically or in response to a request of the program logic 106.

Next in step 408, the program logic 106 receives the determined data of equipment from the database system. For example, this can be performed in response to a submission of a request to the database system or based on a subscription of the program logic 106 to a messaging service offered by a streaming interface of the database system 102. The submitted request and/or the subscription comprise the up-to-date position information of the user wearing the glasses, thereby enabling the database system in step 406 to identify the ones of the equipment being in sufficient spatial proximity to the user wearing the AR glasses.

Next in step 410 the executable program logic 106 causes the AR glasses to display of at least some of the received data, e.g. a GUI with instructions for operating or maintaining the equipment. The displayed data may enable the user to control and/or maintain the equipment and hence also the automated production process.

Figure 5 illustrates an exemplary GUI displayed to a user having assigned an "operator" role. For example, the operator may wear the AR glasses and look at the real equipment. The task instructions A1-A6 are shown by the AR glasses at related x/y/z coordinates. For example, the AR glasses may use the xy coordinates of the different equipment like the dosing unit, the transport and heating unit or the packaging unit for displaying the respective instruction manuals or videos at a predefined distance relative to the real-world positions of the real-world equipment.

For example, the user wearing the glasses may have a registered user account in the user database and his or her user ID is associated with one or more user roles, in this case, the "operator" role. In addition, or alternatively, each user role may optionally include one or more user privileges.

Thus, the executable program logic 106 is configured to select content of the received data (e.g., "filter" content of the received task instructions) to be displayed based upon the one or more user roles and/or the one or more user privileges associated with the user ID. For example, the one or more user roles includes, by way of non-limiting exemplary embodiments only, an operator role, a maintenance role, an engineering role, an administrative role, a guest role. The one or more user privileges and/or roles limits and determines what may be displayed in the AR world through the AR glasses. For example, a user privilege for an engineering role may define which equipment in the plant the user associated with the user ID having the role of engineer is accessible to the user, in the sense of viewing data that corresponds to the equipment through display of the respective task instructions. A user associated with a user ID may have more than one role and more than one user privilege.

In the example depicted in Figure 5, the user wearing the AR glasses has assigned the "operator" role. As a consequence, the executable program logic causes the AR glasses to display the view 500 where the user sees an instruction manual A1 on how to clean a filter when approaching the dosing unit and may further see additional task instructions and respective instruction videos A2, A3. When the user approaches the transport and heating unit, he or she will see the task instructions A7 via the AR glasses. Likewise, he or she will see task instructions A4-A6 when approaching the packaging equipment. The tasks A1-A7 relate to standard tasks which have to be performed in normal operation mode of the industrial plant.

Figure 6 illustrates an exemplary GUI 600 displayed via the AR glasses to a user having assigned the role "maintenance worker". When the maintenance worker wears AR glasses and looks at the real equipment, he or she will see task instructions related to maintenance rather than operational tasks. For example, the user will see task instructions B1 for changing a defect pressure sensor 1234 when approaching the dosing unit and/or will see instructions B2 on how to inspect the heater when approaching the transport and heating unit.

Figure 7 illustrates the use of spatial anchors and shows an avatar of a remote user.

A remote human operator 702 may be an expert for maintaining an equipment, e.g., a complex machine 708. The machine and a local operator 704 are both located at an industrial plant in city B in country B. The remote user 702 is located in a different place, e.g., in city A in country A. The augmented reality system 101 comprises the executable instructions in the form of an augmented reality application (AR application). In addition, the AR system 101 comprises a virtual reality application 701 ("VR-application"). The VR-application is interoperable with the AR-application. The AR system 101 enables the remote user to support the local colleagues 704 in various operational and/or maintenance tasks to be executed locally with or at the equipment 708. The AR system is configured to create an avatar 706 for the remote user and position the avatar at a defined position, e.g. at a position proximate to the machine 708 where his support is needed.

According to preferred embodiments, the AR system comprises a VR application configured to generate a virtual reality for the remote user which enables the remote user to see the local user 704 and/or other real-world objects at the industrial plant, e.g. machine 708, as would be perceived from the perspective of the avatar 706. For example, the remote user can see the live values of the production line and the machine through a robot equipped with a camera and/or further sensors positioned at the same position and orientation as his avatar 706. In some embodiments, the robot is remotely controlled by the remote user 702 and enables the remote user to perform defined operations by the robot. The avatar has a defined position in the 3D environment generated by the AR application 106 and displayed via the AR glasses 104 to the local user 704. Also, the local human user 704 (AR user) and the machine 708 have defined positions within the 3D environment used as the coordinate system of the augmented reality ("mixed reality"). The executable program logic 106 implemented e.g. as AR application program is operatively coupled to the AR glasses 104 and also to the VR application 701 of the remote user. The AR system 101 is configured to ensure that the VR coordinate system seen by the remote user and the AR coordinate system seen by the local user 704 via the AR glasses have the same coordinate system as a basis for positioning of virtual objects (avatars, holograms, GUIs, etc.). The AR application 106 as well as the VR application 701 receive position information of the virtual objects to be displayed in the augmented/virtual reality from the same database system 102. According to some embodiments, the VR application program generates a virtual reality ("manufacturing metaverse") within which an avatar of the local human operator 704 is shown in a defined optical representation (e.g., only a name, or even a 3D avatar shape), so that the remote user can see the local user within the VR app (not shown). Vice versa, the local user (AR user) 704 can see the avatar 706 of the remote user 702 as a hologram (e.g., only as a name or as a 3D avatar shape) within the "manufacturing metaverse" presented as augmented reality to the local user 704 via the AR glasses 104.

According to embodiments, the AR glasses 104 comprise a microphone 710 and an acoustic output interface 712, e.g., speakers providing a user interface to the local user. Likewise, the VR application 701 can comprise a user interface including a microphone and an acoustic output interface for enabling the remote user 702 to interact with the VR application. The AR application program 106 operatively coupled to the AR glasses of the local user interoperates with the VR application such that the remote user 702 and the local user 704 can talk to each other. Preferably, the AR application uses the positional information of the local user and of the avatar of the remote user in the shared coordinate system to control the volume of the acoustic output interface of the AR glasses: the closer the local user 704 to the avatar 706, the greater the volume. Likewise, the sensitivity of the microphone may be adapted as a function of the distance of the two users in the shared coordinate system: the larger the distance, the less sensitive the microphone.

The AR system according to the depicted embodiment comprising the AR application and the VR application hence allows the two users to collaborate using a shared coordinate system also referred to as "manufacturing metaverse". The manufacturing metaverse consists of a virtual coordinate system shared by all users and AR objects in the metaverse, whereby this virtual coordinate system is mapped to and presented as an overlay to real-world objects 708 of the industrial plant. This enables the experienced, remote user to experience the same or a similar visual context like the guided local user.

According to a first scenario, a thermoplastic urethane (TPU) production is taking place at location B. The production line was modified to adapt the line for a new product which was never produced by this production line before. The remote operator is an expert for this kind of production and lives a location A (city A, country A). The remote user will guide the local operators with regard to when valves should be checked and which ones. The remote user will also notify the local user of important things the local user should care of in order to ensure proper and smooth production. Furthermore, the remote user may guide the local user for proper operation steps in the right situation and at the right moment.

According to a second scenario, the TPU production is already taking place at location B. For the night shift time, the work coordinator for that night shift became ill. An experienced human operator at the remote location A (city A, country A, other time zone) can support during dayshift for the production of location B. He will use his avatar for direct collaboration with the one or more local human operators. The remote user can coordinate the work for local workers by creating processes/tasks which can be carried out by the local users (AR user).

According to a third scenario, an autonomous TPU production is taking place at location B. Under normal/standard conditions, the line can run completely autonomous. Manual operation is only needed in case something unforeseen happens. This supervision job will be done via manufacturing metaverse with the VR application from remote. One or more robots are coordinated and triggered by the remote human operator by creating/using the right processes/tasks for the robot(s). In case the remote human operator needs to see a real picture and/or video stream of the local situation, the remote user is enabled via the VR application and an AR application associated with a control program of a robot to move to the equipment of interest. The robot is equipped with a camera and is controlled to take the same position and direction as the position of the remote user's avatar. When the robot has reached this position, the camera of the robot is caused to take images and/or videos of the equipment in front of the avatar/robot and transfer the images or videos to the VR application. The remote user will see the images and/or videos via the virtual reality created by the VR application. As the robot is controlled to take the images and/or videos from the same position and orientation as the remote user's avatar in the mixed-reality coordinate system at the industrial plant, the photos and images will show the equipment of interest from the same perspective a local human operator would have at the said position and orientation.

Embodiments of the invention may be used for many other scenarios and industries. For example, embodiments of the invention may be used in the car manufacturing industry and allow experienced engineers to support colleagues working at other sites of the car manufacturing company.

Likewise, the AR system can be used in the healthcare business and allow a medical expert or doctor to support other doctors working at other hospitals.

In some use case scenarios, the robot is not only used for acquiring images or videos but can also be used for fixing a problem under the control of the remote user. For example, robots may be used for performing maintenance tasks at locations which are dangerous for human operators, e.g., in the context of deep-sea construction work, or in the context of tasks to be executed in an environment which is contaminated or at risk to be contaminated with radioactive substances or toxic chemicals.

According to some embodiments, spatial anchors are used for positioning virtual objects at a defined position and orientation relative to real world objects such as equipment 708. For example, it may be desirable to display a GUI-hologram enabling the user to monitor and control the equipment 708 at a distance of about 40 cm in front of the equipment.

In order to ensure that the local user 704 will see the GUI-hologram always at this defined position in the augmented reality irrespective of the current position of the user 704, the executable program logic 106 generates and display the GUI hologram at the spatial anchor or at a defined distance relative to the spatial anchor. According to some embodiments, the spatial anchors (i.e., at least an anchor-ID and anchor coordinates) are stored in the database system such that they are accessible to the VR-application 701. The VR application is configured to read the stored spatial anchors and to generate and display the same virtual object, e.g., the GUI hologram for equipment 708, at said spatial anchor or at aid defined distance relative to the spatial anchor.

According to some embodiment, spatial anchors are defined and created by placing machine-readable codes, e.g., QR codes 711, 713, 714 at various places within the industrial plant. The AR glasses 104 may comprise a camera which acquires digital images of the machine-readable codes, extracts an anchor-ID encoded therein, creates an anchor having the coordinates of the machine-readable code within the real-world coordinate system, and stores these anchors in the database system. Alternatively, the user 704 may create a spatial anchor by performing an anchor-creation gesture at a desired position in the real world. This gesture is captured by a camera of the AR glasses and a spatial anchor is created and stored by the executable program logic 106 analogously. The anchor-ID may be crated automatically upon the creation of the spatial anchor.

Figure 8 illustrates a coordinate system 800 used by the VR application 701 for generating virtual representations 808 of real-world equipment 708 of the industrial plant and displaying the virtual representations to a remote user 702 via a virtual reality display technique. The coordinate system 800 of this virtual reality may further comprise virtual representations 804, e.g., avatars, of local users 704 operating in spatial proximity to the real-world objects 704. The distances of the virtual representations 808, 804 of the equipment 708 and local users 704 within coordinate system 800 correspond to and reflect the real distances of the real-world objects can be represented via a spatial mesh overlaying the equipment of equipment 708 and local users 704 at the industrial plant in the real world. In addition, the remote user 702 may be represented in this coordinate system 800 as a virtual entity, e.g., an avatar 706 which can be seen by the local user 704 via the AR glasses 704. Figure 8 shows the coordinate system shared by the virtual reality generated by the VR application and the AR reality generated by the AR application, but preferably the remote user sees objects and avatars in the coordinate system 800 from the perspective (position and orientation) of his avatar 706 (not shown).

Aspects of the present disclosure are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

Embodiments of the present disclosure may be a system, a method, a product, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

## Claims

1. An automation system (100) for controlling an automated production process of an industrial plant, the industrial plant including a plurality of equipment (122, 124) for performing the production process, the plurality of equipment being spatially distributed in the industrial plant, the automation system comprising:
- an augmented reality system (101), including:
∘ a database system (102) configured to store data and spatial coordinates associated with respective equipment of the plurality of equipment;
∘ augmented reality glasses (104) configured to display the data; and
∘ executable program logic (106) coupled to the augmented reality glasses, the executable program logic configured to receive an up-to-date spatial position of a user wearing the augmented reality glasses from a positioning system (108) and the data of equipment that are located in a proximity of the up-to-date spatial position of the user from the database system, the executable program logic further configured to control the augmented reality glasses for display of at least some of the received data.

2. The automation system of claim 1, wherein the augmented reality system further includes the positioning system (108), the positioning system configured for sensing a spatial position of the user in the plant.

3. The automation system of claim 2, wherein the positioning system includes a spatial mapping mesh covering at least a portion of the plant, an indoor positioning system, a cellular positioning system, or a GPS receiver configured to determine the spatial position.

4. The automation system of claim 3, wherein the spatial mapping mesh comprises spatial anchors, wherein the spatial anchors are interconnected, and wherein each spatial anchor relates a coordinate system associated with the augmented reality glasses for the display of the data to a spatial coordinate system associated with the spatial coordinates of one or more of the plurality of equipment (122, 124) stored in the database system, wherein the program logic is configured to display the data of equipment that is located in a proximity of the up-to-date spatial position of the user via the augmented reality glasses at predefined positions relative to the spatial anchors.

5. The automation system of any one of the previous claims, wherein the augmented reality system is configured to create an avatar (706) for at least one remote user, the remote user (702) being remote to the industrial plant, wherein the program logic is configured to display the avatar in a proximity of the up-to-date spatial position of the user wearing the augmented reality glasses via the augmented reality glasses, wherein preferably the augmented reality system is configured to provide a bidirectional visual and/or acoustic communication channel between the user wearing the augmented reality glasses and the remote user.

6. The automation system of claim 5, wherein the augmented reality glasses comprise an acoustic output interface, wherein the augmented reality system is configured to provide a bidirectional acoustic communication channel between the user wearing the augmented reality glasses and the avatar, and wherein the program logic is configured to control the acoustic output interface such that the volume of the voice of the avatar output via the acoustic output interface to the user wearing the augmented reality glasses negatively correlates with the distance of the user wearing the glasses and the avatar within the coordinate system associated with the augmented reality glasses for the display of the data.

7. The automation system of claim 5 or 6,
- wherein the automation system comprises a robot with a camera and/or a microphone, the robot being located in the industrial plant,
- wherein the augmented reality system comprises a robot-control module configured to control the movement and/or orientation of the robot such that the position and/or orientation of the robot reflects the position and/or orientation of the avatar within the augmented reality displayed via the AR glasses, and
- wherein the robot-control module is configured to automatically update the position and/or orientation of the avatar and the robot in accordance with a change in the position and/or orientation of the remote user or in response to a control command submitted by the remote user.

8. The automation system of any one of the preceding claims, the database system being a graph database system, a spatial database system and/or a streaming database system.

9. The automation system of any one of the previous claims, the automation system further comprising:
- a distributed control system (132) coupled to the database system, the distributed control system including:
∘ a memory configured to store one or more process parameters in association with one or more of the equipment and to store process control software (136), and
∘ a processor (138) configured to execute the process control software for automatically controlling the production process.

10. The automation system of claim 9, further comprising:
- one or more sensors (114, 114) coupled to at least one equipment, the one or more sensors configured to measure the one or more process parameters of the at least one equipment, the one or more process parameters indicating the current state of the production process of the plant and/or the current state or mode of operation of the equipment; and
- one or more actuators (118, 120) coupled to the at least one equipment, the one or more actuators configured to control the one or more process parameters or configured to be operated in accordance with the one or more control parameters,
wherein the distributed control system is coupled to the one or more sensors and the one or more actuators, wherein the processor is configured to execute the process control software for automatically controlling the production process based on measurement signals received from the one or more sensors and control signals sent to the one or more actuators.

11. The automation system of any one of the previous claims, further comprising a user database (140) coupled to the distributed control system, the user database configured to store user information associated with the production process, wherein the user information comprises user IDs, user roles and/or user privileges.

12. The automation system of claim 11, wherein the executable program logic is configured to receive user credentials from the user and to authenticate the user, wherein a user ID of the user wearing the augmented reality glasses is associated with one or more of the user roles and each user role of the one or more user roles includes one or more of the user privileges, and wherein the executable program logic is further configured to select and display content (500, 600) of the at least some of the received data for display based upon the one or more user roles and/or the one or more user privileges associated with the user ID.

13. The automation system of claim 11 or 12, wherein the one or more user roles includes one or more of a maintenance role and an engineering role, and the one or more user privileges defines access to one or more specific equipment of the plurality of equipment.

14. The automation system of any one of the previous claims, wherein the data comprises one or more task instructions associated with the respective equipment.

15. The automation system of any one of the previous claims, wherein one or more equipment of the plurality of equipment are one or more machines.

16. The automation system of any one of the previous claims, wherein the executable program logic is configured to perform a query of the database based upon the up-to-date spatial position for retrieving, from the database, the data of equipment that are located in the proximity of the up-to-date spatial position of the user.

17. The automation system of any one of the previous claims, wherein the database system is accessible via a subscription-based streaming service, and wherein the executable program logic is configured to receive from the database via the streaming service the data of equipment that are located in the proximity of the up-to-date spatial position of the user.

18. The automation system of claim 16 or 17,
- wherein the database system is configured to provide, in response to the query of the executable program logic according to claim 16, selectively the data of equipment that are located proximate to the up-to-date spatial position of the user wearing the augmented reality glasses, whereby a movement of the user relative to the equipment triggers the executable program logic to submit a new query to the database system comprising a new up-to-date spatial position of the user; or
- wherein the database system is configured to provide, via the subscription-based streaming service according to claim17, selectively the data of equipment that are located proximate to the up-to-date spatial position of the user wearing the augmented reality glasses, whereby a movement of the user relative to the equipment triggers the executable program logic to update the subscription with new up-to-date spatial position of the user.

19. The automation system of any one of the previous claims, wherein the executable program logic is configured for:
- receiving coordinates of visual objects graphically representing the data of the equipment proximate to the user wearing the augmented reality glasses,
- determining said user's line of sight in the coordinate system of the real world;
- receiving, from the database system, coordinates of real-world objects which are proximate to the up-to-date spatial position of the user wearing the augmented reality glasses;
- determining if one or more of the virtual objects representing data of an equipment are positioned along the user's line of sight and are farther away from the user than at least one of the real world objects which is also positioned along the user's line of sight;
- not displaying selectively the one or more virtual objects determined to be on the user's line of sight and be located farther away than at least one of the real-world objects.

20. The automation system of any one of the previous claims, wherein the database system is a graph database system, the graph database system including a graph database having a plurality of interconnected nodes (300), wherein each node represents one or more objects of the industrial plant and includes spatial information associated with the one or more objects, and wherein the one or more objects are selected from a group consisting of a sensor, an actuator, raw material, and/or an equipment of the plurality of equipment, the equipment being e.g., a machine or a robot.

21. The automation system of claim 20, wherein one or more of the nodes comprises or is stored in association with at least one respective container, each container being an isolated runtime environment instance comprising software for monitoring and/or operating at least one of the one or more objects represented by said node, and wherein the software in each container comprises a position reporting module configured to monitor the position of at least one of the one or more objects of the respective node and to update the spatial information associated with the at least objects of the respective node in the database system.

22. The automation system of claim 21, wherein the spatial information associated with the least one object of the respective node includes one or more spatial coordinates of the at least one object, the one or more spatial coordinates corresponding to one or more points on a bounding surface of the object and/or inside the bounding surface of the object.

23. The automation system of any one of the previous claims, further comprising a network communicatively coupling the database system to the augmented reality glasses.

24. A method of using an automation system (100) for controlling an automated production process of an industrial plant, the industrial plant including a plurality of equipment (122, 124) for performing the production process, the plurality of equipment being spatially distributed in the industrial plant, the method comprising:
- providing (402) the automation system, the automation system comprising an augmented reality system, the augmented reality system including:
∘ a database system (102) having stored data and spatial coordinates associated with respective equipment of the plurality of equipment;
∘ augmented reality glasses (104) configured to display the data; and
∘ executable program logic (106) coupled to the augmented reality glasses,
- receiving (404), by the executable program logic (106), an up-to-date spatial position of a user wearing the augmented reality glasses, from a positioning system (108),
- determining (406), by the database system, the data of equipment that are located in a proximity of the up-to-date spatial position of the user,
- receiving (408), by the executable program logic (106), the determined data of equipment from the database system;
- controlling (410), by the executable program logic, the augmented reality glasses to display of at least some of the received data, the displayed data enabling the user to control and/or maintain the automated production process.
